(19) Europäisches Patentamt
European Patent Office
Office européen des brevets

(11) EP 1 439 529 A2

(12) EUROPEAN PATENT APPLICATION

(43) Date of publication:
21.07.2004 Bulletin 2004/30

(51) Int Cl.⁷: **G11B 7/005**, G11B 19/18

(21) Application number: 03257188.7

(22) Date of filing: 14.11.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 18.11.2002 JP 2002333155
19.11.2002 JP 2002334638
27.11.2002 JP 2002343208
27.11.2002 JP 2002343267
28.11.2002 JP 2002344856
28.11.2002 JP 2002344955

(71) Applicant: **Mitsumi Electric Co., Ltd.**
**Tama-Shi, Tokyo (JP)**

(72) Inventors:
• **Furukawa, Kenichi, Mitsumi Electric Co., Ltd.**
**Atsugi-shi Kanagawa (JP)**
• **Maekawa, Yuichi, Mitsumi Electric Co., Ltd.**
**Atsugi-shi Kanagawa (JP)**

(74) Representative: **Haley, Stephen**
**Gill Jennings & Every,**
**Broadgate House,**
**7 Eldon Street**
**London EC2M 7LH (GB)**

(54) **Optical disc drive having a function for estimating birefringence of disc**

(57) According to an aspect of this invention the optical disc drive comprises an arrangement for preliminarily moving the optical pickup unit to a predetermined position of the optical disc before carrying out reading/writing of data for the optical disc, a measuring arrangement for measuring a peak level of an HF signal obtained by the optical pickup unit with a rotation speed of the optical disc changed, an arrangement for using, as a reference level, the peak level of the HF signal obtained by the optical pickup unit on rotating the optical disc at a low rotation speed without effect on stress, an estimating arrangement for estimating an amount of double refraction of the optical disc using the reference level and a peak level of the HF signal measured on rotating the optical disc at a desired rotation speed, and a reducing arrangement for reducing the rotation speed of the optical disc by determining the influence of the double refraction of the optical disc caused by the stress occurring by rotation of the optical disc when the estimated amount of double refraction is not less than a predetermined amount of double refraction.

FIG. 11

## Description

This application claims priority to prior applications JP 2002-333155, JP 2002-334638, JP 2002-343267, JP 2002-343208, JP 2002-344856, and JP 2002-344955, the disclosure of which is incorporated herein by reference.

This invention relates to an optical disc drive and an optical disc reading device for use in an optical disc drive using, as an optical pickup unit, an optical pickup unit of a polarization optical system.

Recent years, an optical disc drive is often used in an electronic apparatus such as a personal computer. As a recording medium usable to the optical disc drive, a CD-R (compact disc-recordable) or a CD-RW (compact disc-rewritable) are known in the art.

The CD-R is an additionally writable recording medium. In the CD-R, data can be written therein only once and written data cannot be erased or rewritten therefrom.

Although the CD-RW is a rewritable recording medium, the CD-RW is compatible with a CD-ROM and a CD-DA. The CD-RW, which is different from the CD-R, has a recording layer made of a phase-shifting material. In the CD-RW, an erased state (a crystal phase) and a recording state (an amorphous phase) are recorded by radiation of a laser beam and date is read due to differences of its reflection rate therefrom. The CD-RW has a lower reflection rate of light from the medium compared with the CD-ROM pressed or the CD-R using coloring matter.

An exclusive device and an application program for writing are required to write information (data) into the CD-R or the CD-RW. On the other hand, a normal CD-ROM drive can read the information (data) from the CD-R or the CD-RW. The CD-R, the CD-RW, the CD-ROM, the CD-DA, a DVD-ROM, a DVD-R, a DVD-RAM, a DVD+RW, a DVD-RW, and so on are collectively called herein optical discs.

In order to write/read information (data) in/from the optical disc, the optical disc drive comprises a recording/reproducing optical pickup unit for irradiating the laser beam on the optical disc.

In general, the optical pickup unit of the type described comprises a laser optical source for producing the laser beam and an optical system for guiding the produced optical beam to the optical disc. In the manner which is described above, it is possible for the CD-R to carry out not only reading of information but also writing of information. It is necessary for the optical pickup unit for the CD-R to change an output of the laser beam between on reading of information and on writing of information. This is because the writing of information is carried out by forming pits on a recording layer of the optical disc by irradiating of the laser beam. The output of the laser beam produced by the layer optical source on writing of information is larger than that on reading of information, for instance, by a factor of about ten through twenty.

Such an optical pickup unit carries out recording (writing) or erasing of information by passing a laser beam radiated by the above-mentioned laser optical source through the optical system and by converging the laser beam on a signal recording surface of the optical disc through an objective lens comprising a part of the optical system. On the other hand, the optical pickup unit carries out reproducing of information by detecting a reflected beam (a return beam) from the signal recording surface by a photodetector serving as an optical detecting arrangement. Optical systems for the optical pickup unit are classified into a polarization optical system and a non-polarization optical system. The "polarization optical system" is an optical system which can change a polarized direction of a laser beam while the "non-polarization optical system" is an optical system in which the polarized direction of the laser beam does not change.

Inasmuch as recording/reproducing of the optical disc is carried out using the laser beam produced by the optical pickup unit in the optical disc drive, focusing control and tracking control are indispensable to the optical disc drive. The "focusing control" means to control the objective lens so as to hold a distance between the optical disc and the objective lens a constant while the "tracking control" means to control the objective lens to make a beam spot of the laser beam follow on a track of the optical disc. In order to carry out the focusing control and the tracking control, the optical pickup unit comprises an optical pickup actuator for making the above-mentioned objective lens shift up and down (in a focusing direction) and right and left (in a tracking direction).

The optical disc drive comprises a reproducing circuit (an optical disc reading device) for reproducing the return beam detected by the above-mentioned photodetector. An electric signal reproduced by the reproducing circuit (optical disc reading device) is called an HF (High frequency) signal.

In the optical disc drive, the HF signal has a varying amplitude due to causes which will later be described. It is thought that the causes are that an optical axis of the laser beam incident on the optical disc is not normal to a main surface of the optical disc due to a warp of the optical disc and/or precision of a sled mechanism, double refraction of the optical disc, dirt of a surface of the optical disc, a laser wavelength of the optical source in the optical pickup unit, and so on.

If the amplitude of the HF signal increases or decreases more a designed value, it results in degradation of a signal-to-noise ratio (S/N). As a result, a conventional reproducing circuit (optical disc reading device) normally comprises an amplifier for amplifying the HF signal to which an automatic gain control (AGC) function is added. The amplifier with the AGC function controls the amplified HF signal to that the amplitude of the amplified HF signal is always fixed.

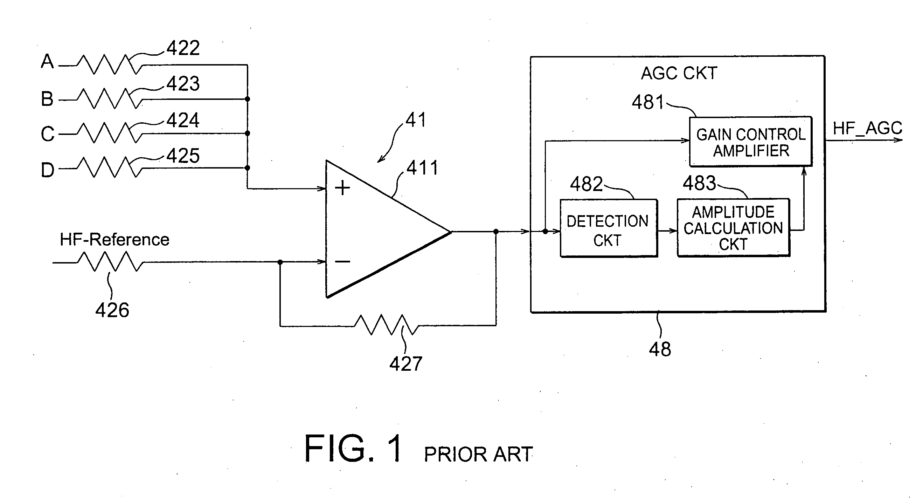

In the manner which will later be described in conjunction with Fig. 1, the conventional optical disc reading device comprises an adder circuit and an automatic gain control (AGC) circuit. The AGC circuit comprises a gain control amplifier, a detection circuit, and an amplitude calculation circuit. The detection circuit detects the HF signal to produce a detected signal. The amplitude calculation circuit calculates an amplitude of the HF signal from the detected signal to control a gain of the gain control amplifier on the basis of a calculated amplitude. Specifically, if the amplitude of the HF signal is small, the amplitude calculation circuit controls so as to increase the gain of the gain control amplifier. If the amplitude of the HF signal is large, the amplitude calculation circuit controls so as to decrease the gain of the gain control amplifier. The gain control amplifier amplitudes the HF signal according to a controlled gain to produce an amplified HF signal.

However, the optical disc having a writing function is not necessary to have the HF signal on the optical signal. If an AGC function of the gain control amplifier operates with no HF signal, the gain control amplifier is put into an abnormally high gain. When the HF signal suddenly appears in this state, the gain of the gain control amplifier is too high and the amplified HF signal occurs a clip. As a result, it is an obstacle to read data. Accordingly, in order to do not make such a state, it is necessary to take measures to fix the gain of the gain control amplifier or the like.

There is an optical defect called "double refraction" in the optical disc. The "double refraction" is a phenomenon where two reflected light beams appear when a light beam reflects at a boundary surface. In other words, the birefringence means that propagation speeds of the light beams are different caused by a direction of a vibration surface of the light beams when the light beams passes through in a substance. Inasmuch as refractive index is different due to the direction of the vibration surface of the light beam, it is called the "double refraction." A direction where the propagation speed of the light beam is fast (a phase is fast) is called a fast phase axis in a phase element while a direction where the propagation speed of the light beam is late (the phase is late) is called a late phase axis. The fast phase axis and the late phase axis are collectively called "main axes" of the double refraction.

A high polymer orientation film, a liquid crystal high polymer, an optical crystal, and so on have a double refraction character. In addition, when stress, an electric field, a magnetic field or the like are applied to an isotropic substance (medium) from the outside, the substance has temporally anisotropy and occurs the double refraction (a photoelastic effect, a Kerr effect, a magnetic double refraction). The "photoelastic effect" is a phenomenon where an optical strain or an optical anisotropy occurs caused by a strain or a stress and the double refraction or the like occurs when a mechanical force is applied to an optical isotropic elastic body. The "Kerr effect" is one of electrical-optical effects and is the double refraction induced by an electric field E to the second power in phenomena where refractive index of the substance varies due to the electric field. The "magnetic double refraction is a phenomenon where an optically transparent substance or a transparent magnetic body occurs an optical double refraction in a magnetic field and is called a Cotton-Mouton effect.

In an optical disc drive using an optical pickup unit of a polarization optical system, the double refraction phenomenon results in decreasing of a reflected signal from the optical disc.

In the optical disc of a writing type, a phenomenon of degradation of a writing characteristic occurs. This occurs because an optical strain occurs in the optical disc due to the double refraction. It is therefore to predict degradation of quality in a signal written in the optical disc because it is not clear whether or not a spot is warped how far.

A value of the double refraction in the optical disc is different every optical disc (i.e. a molding condition, a material, or the like). In addition, the value of the double refraction is different in positions of the optical disc due to stress affected to the optical disc caused by a rise of number of revolution in the optical disc.

They are phenomena optically occurring. In prior art, there is no method of improving the phenomena in the optical disc drive.

It is therefore an object of this invention to provide an optical disc reading device which is capable of always controlling a gain of an amplifier therein actively although an optical 'disc of a writing type is put into no recording state.

It is another object of this invention to provide an optical disc drive which is capable of preventing functional failure (errors) and so on with a characteristic malfunction due to a double refraction in an optical disc.

Other objects of this invention will become clear as the description proceeds.

On describing the gist of this invention, it is possible to be understood that an optical disc reading device is for reading a picked-up signal from a rotating optical disc by an optical pickup unit. The optical disc reading device comprises an amplifying arrangement for amplifying the picked-up signal to produce an amplified signal and a gain control arrangement for controlling a gain of the amplifying arrangement so that a peak level of the amplified signal is fixed.

In the aforementioned optical disc reading device, the optical pickup unit preferably may comprise an optical pickup unit of a polarization optical system. The gain control arrangement may comprise a peak hold circuit for holding a peak of the picked-up signal to produce a peak held signal. In this event, the amplifying arrangement may comprise a gain control amplifier for amplifying the picked-up signal by a gain equal to a reciprocal of the peak held signal to produce the amplified signal. Alternatively, the amplifying arrangement may comprise a divider for dividing the picked-up signal by the peak held signal to produce a divided result as the amplified signal.

According to a first aspect of this invention, an optical disc drive is for picking up a signal from a rotating optical disc by an optical pickup unit. The optical disc drive comprises an arrangement for preliminarily moving the optical pickup unit to a predetermined position of the optical disc before carrying out reading/writing of data for the optical disc, a measuring arrangement for measuring a peak level of an HF signal obtained by the optical pickup unit with a rotation speed of the optical disc changed, an arrangement for using, as a reference level, the peak level of the HF signal obtained by the optical pickup unit on rotating the optical disc at a low rotation speed without effect of stress, an estimating arrangement for estimating an amount of double refraction of the optical disc using the reference level and a peak level of the HF signal measured on rotating the optical disc at a desired rotation speed, and a reducing arrangement for reducing the rotation speed of the optical disc by determining the influence of the double refraction of the optical disc caused by the stress occurring by rotation of the optical disc when the estimated amount of double refraction is not less than a predetermined amount of double refraction.

In the aforementioned optical disc drive according to the first aspect of this invention, an amplitude of the HF signal may be used in place of the peak level of the HF signal. The optical disc drive further may comprise an arrangement for repeating an estimation operation by the estimating arrangement and a reduction operation by the reducing arrangement until the estimated amount of double refraction is less than the predetermined amount of double refraction.

According to a second aspect of this invention, an optical disc drive is for picking up a signal from a rotating optical disc by an optical pickup unit. The optical disc drive comprises an arrangement for preliminarily rotating the optical disc at a desired rotation speed before carrying out reading/writing of data for the optical disc, a measuring arrangement for measuring a peak level of an HF signal obtained by the optical pickup unit with the optical pickup moved from an inner circumference to an outer circumference of the optical disc, an arrangement for using, as a reference level, the peak level of the HF signal obtained by the optical pickup unit when the optical pickup unit lies in an inner circumference of the optical disc, an estimating arrangement for estimating an amount of double refraction of the optical disc using the reference level and a peak level of the HF signal measured when the optical pickup unit lies in a predetermined outer circumference position of the optical disc, and a reducing arrangement for reducing the rotation speed of the optical disc by determining the influence of the double refraction of the optical disc caused by stress occurring by rotation of the optical disc when the estimated amount of double refraction is not less than a predetermined amount of double refraction.

In the aforementioned optical disc drive according to the second aspect of this invention, an amplitude of the HF signal may be used in place of the peak level of the HF signal. The optical disc drive further may comprise an arrangement for repeating an estimation operation by the estimating arrangement and a reduction operation by the reducing arrangement until the estimated amount of double refraction is less than the predetermined amount of double refraction.

According to a third aspect of this invention, an optical disc drive is for picking up a signal from a rotating optical disc by an optical pickup unit. The optical disc drive comprises an arrangement for making the optical disc rotate at a low rotation speed with no stress during reading/writing of data for the optical disc, an arrangement for measuring a peak level of an HF signal obtained by the optical pickup unit with the optical pickup unit moved in an inner circumference of the optical disc to store a measured peak level as a reference level, an arrangement for making the optical disc rotate at a desired rotation speed, an arrangement for measuring a peak level of the HF signal obtained by the optical pickup unit with the optical pickup unit moved from the inner circumference toward an outer circumference of the optical disc, an arrangement for estimating an amount of double refraction of the optical disc using the reference level and a peak level of the HF signal measured every when the optical pickup unit lies in predetermined positions of the optical disc, and an arrangement for reducing the rotation speed of the optical disc by determining the influence of the double refraction of the optical disc caused by stress occurring by rotation of the optical disc when the estimated amount of double refraction is not less than a predetermined amount of double refraction.

In the aforementioned optical disc drive according to the third aspect of this invention, an amplitude of the HF signal may be used in place of the peak level of the HF signal.

According to a fourth aspect of this invention, an optical disc drive is for picking up a signal from a rotating optical disc by an optical pickup unit. The optical disc drive comprises an arrangement for preliminarily rotating the optical disc at a desired rotation speed before carrying out reading/writing of data for the optical disc, a measuring arrangement for measuring a peak level of an HF signal obtained by the optical pickup unit with the optical pickup moved from an inner circumference to an outer circumference of the optical disc, an arrangement for using, as a reference level, the peak level of the HF signal obtained by the optical pickup unit when the optical pickup unit lies in an inner circumference of the optical disc, an estimating means for estimating an amount of double refraction of the optical disc using the reference level and a peak level of the HF signal measured when the optical pickup unit lies in a predetermined outer circumference position of the optical disc, and a correcting arrangement for carrying out correction by determining the influence of the double refraction of the optical disc caused by stress occurring by rotation of the optical disc when the estimated amount of double refraction is not less than a predetermined amount of double refraction.

In the aforementioned optical disc drive according to the fourth aspect of this invention, an amplitude of the HF signal may be used in place of the peak level of the HF signal. The correcting arrangement may comprise an arrangement for correcting a gain of an amplifier for amplifying the HF signal or may comprise an arrangement for correcting quantity of light radiated by a semiconductor laser in the optical pickup unit.

According to a fifth aspect of this invention, an optical disc drive is for picking up a signal from a rotating optical disc by an optical pickup unit. The optical disc drive comprises an arrangement for making the optical disc rotate at a low rotation speed with no stress during reading/writing of data for the optical disc, an arrangement for measuring a peak level of an HF signal obtained by the optical pickup unit with the optical pickup unit moved in an inner circumference of the optical disc to store a measured peak level as a reference level, an arrangement for making the optical disc rotate at a desired rotation speed, an arrangement for measuring a peak level of the HF signal obtained by the optical pickup unit with the optical pickup unit moved from the inner circumference toward an outer circumference of the optical disc, an arrangement for estimating an amount of double refraction of the optical disc using the reference level and a peak level of the HF signal measured every when the optical pickup unit lies in predetermined positions of said optical disc, and a correcting arrangement for carrying out correction by determining the influence of the double refraction of the optical disc caused by stress occurring by rotation of the optical disc when the estimated amount of double refraction is not less than a predetermined amount of double refraction.

In the aforementioned optical disc drive according to the fifth aspect of this invention, an amplitude of the HF signal may be used in place of the peak level of the HF signal. The correcting arrangement mans may comprise an arrangement for correcting a gain of an amplifier for amplifying the HF signal or may comprise an arrangement for correcting quantity of light radiated by a semiconductor laser in the optical pickup unit.

Fig. 1 is a block diagram showing a conventional optical disc reading device;

Figs. 2A and 2B are plan and left-hand side views showing a state where an optical pickup unit moves in an inner circumference in an optical disc drive to which an optical disc reading device according to an embodiment of this invention is applicable;

Figs. 3A and 3B are plan and left-hand side views showing a state where the optical pickup unit moves in an outer circumference in the optical disc drive illustrated in Figs. 2A and 2B;

Fig. 4 is a block diagram showing an optical pickup unit of a polarization optical system for use in the optical disc drive illustrated in Figs. 2A through 3B;

Figs. 5A and 5B are plan and schematic sectional views showing a spot of a laser beam radiated on an optical disc;

Figs. 6A and 6B are plan and right-hand side views showing a photodetector for receiving a reflected beam (a return beam) for use in the optical pickup unit of the polarization optical system illustrated in Fig. 4;

Fig. 7 is a block diagram showing an optical disc reading device according to a first embodiment of this invention;

Fig. 8 is a block diagram showing an optical disc reading device according to a second embodiment of this invention;

Fig. 9 is a block diagram showing an I-TOP level detecting circuit for detecting a level of a reflected side signal (I-TOP) in an HF signal;

Fig. 10 is a block diagram showing an optical disc drive according to a first embodiment of this invention;

Fig. 11 is a view showing levels of the I-TOP obtained with the optical pickup unit of the polarization optical system moved from the inner circumference toward the outer circumference of the optical disc when a rotation speed of the optical disc is equal to two and forty eight times a standard speed;

Figs. 12A and 12B collectively show a flow chart for use in describing operation for carrying out a reduction operation of the rotation speed by preliminarily measuring (estimating) a double refraction before reading/writing of data;

Fig. 13 shows a flow chart for use in describing operation of measurement of the double refraction in Fig. 12B;

Fig. 14 is a view showing levels of the I-TOP obtained with the optical pickup unit of the polarization optical system moved from the inner circumference toward the outer circumference of the optical disc when a rotation speed of the optical disc is equal to one, four, sixteen, thirty tow, and forty eight times a standard speed;

Figs. 15A and 15B collectively show a flow chart for use in describing operation in a first mode for carrying out a reduction operation of a rotation speed by preliminarily measuring (estimating) the double refraction before reading/writing of data:

Fig. 16 shows a flow chart for use in describing operation of measurement of the double refraction in Fig. 15B;

Figs. 17A and 17B collectively show a flow chart for use in describing operation in a second mode for carrying out a reduction operation of a rotation speed by measuring (estimating) the double refraction during reading/writing of data;

Fig. 18 is a block diagram showing an optical disc drive according to a second embodiment of this invention;

Fig. 19 is a block diagram showing an analog signal processor (ASP) and a central processing unit (CPU) in the optical disc drive illustrated in Fig. 18;

Figs. 20A and 20B collectively show a flow chart for use in describing operation in a first mode for carrying out correction by changing a gain of an amplifier by preliminarily measuring (estimating) the double refraction before reading/writing of data;

Figs. 21A and 21B collectively show a flow chart for use in describing operation in a first mode for carrying out correction by changing quantity of light in laser radiation by preliminarily measuring (estimating) the double refraction before reading/writing of data;

Figs. 22A and 22B collectively show a flow chart for use in describing operation in a second mode for carrying out correction by changing a gain of an amplifier by measuring (estimating) the double refraction during reading/writing of data;

Figs. 23A and 23B collectively show a flow chart for use in describing operation in a second mode for carrying out correction by changing quantity of light in laser radiation by measuring (estimating) the double refraction during reading/writing of data;

Fig. 24 is a view showing a dependent relationship between quantity of light in a return beam to a photodetector and an amount of double refraction in an optical disc;

Figs. 25A through 25E collectively show views for use in describing independence of the double refraction in the optical disc for the return beam to the photodetector;

Fig. 26 is a table showing a relationship among the amount of the double refraction in the optical disc, a phase shift, and quantity of incident light to the photodetector; and

Fig. 27 is a view showing a relationship between the quantity of incident light to the photodetector and the amount of the double refraction in the optical disc.

Referring to Fig. 1, a conventional optical disc reading device will be described at first in order to facilitate an understanding of the present invention. The illustrated optical disc reading device comprises an adder circuit 41 and an automatic gain control (AGC) circuit 48.

The adder circuit 41 comprises an operational amplifier 411. The operational amplifier 411 has a noninverting input terminal + supplied through resistors 422 to 425 with four main electric signals detected by a photodetector of an optical pickup unit. The operational amplifier 411 has an inverting input terminal - supplied with an HF reference voltage through a resistor 427. The operational amplifier 411 has an output terminal connected to the inverting input terminal - through a resistor 427. The adder circuit 41 produces an HF signal (a pickedup signal).

The output terminal of the adder circuit 41 is connected to the AGC circuit 48. The AGC circuit 48 comprises a gain control amplifier 481, a detection circuit 482, and an amplitude calculation circuit 483. The detection circuit 482 detects the HF signal to produce a detected signal. The amplitude calculation circuit 483 calculates an amplitude of the HF signal from the detected signal to control a gain of the gain control amplifier 481 on the basis of a calculated amplitude. Specifically, if the amplitude of the HF signal is small, the amplitude calculation circuit 483 controls so as to increase the gain of the gain control amplifier 481. If the amplitude of the HF signal is large, the amplitude calculation circuit 483 controls so as to decrease the gain of the gain control amplifier 481. The gain control amplifier 481 amplitudes the HF signal according to a controlled gain to produce an amplified HF signal.

However, the optical disc having a writing function is not necessary to have the HF signal on the optical signal. If an AGC function of the gain control amplifier 481 operates with no HF signal, the gain control amplifier 481 is put into an abnormally high gain. When the HF signal suddenly appears in this state, the gain of the gain control amplifier 481 is too high and the amplified HF signal occurs a clip. As a result, it is an obstacle to read data. Accordingly, in order to do not make such a state, it is necessary to take measures to fix the gain of the gain control amplifier 481 or the like, as mentioned in the preamble of the instant specification.

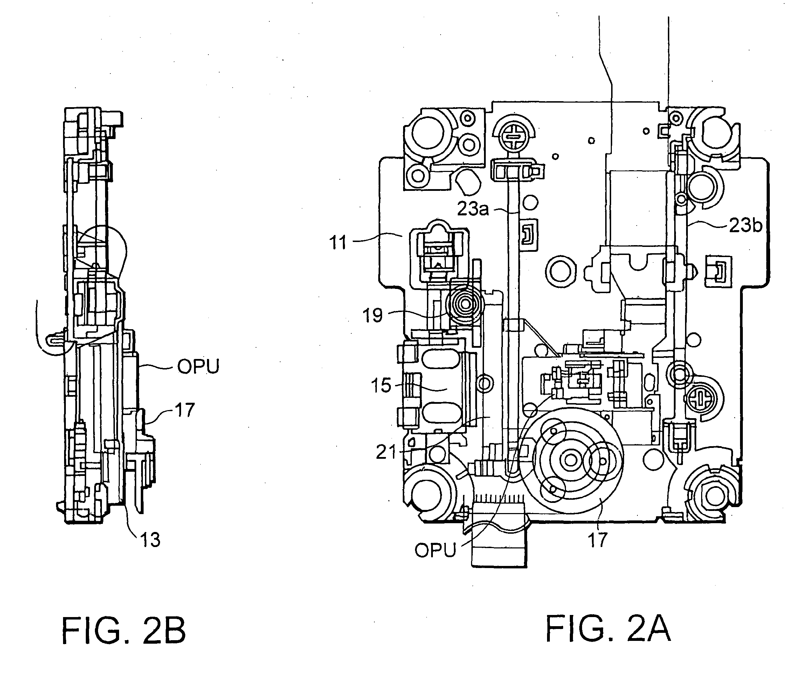

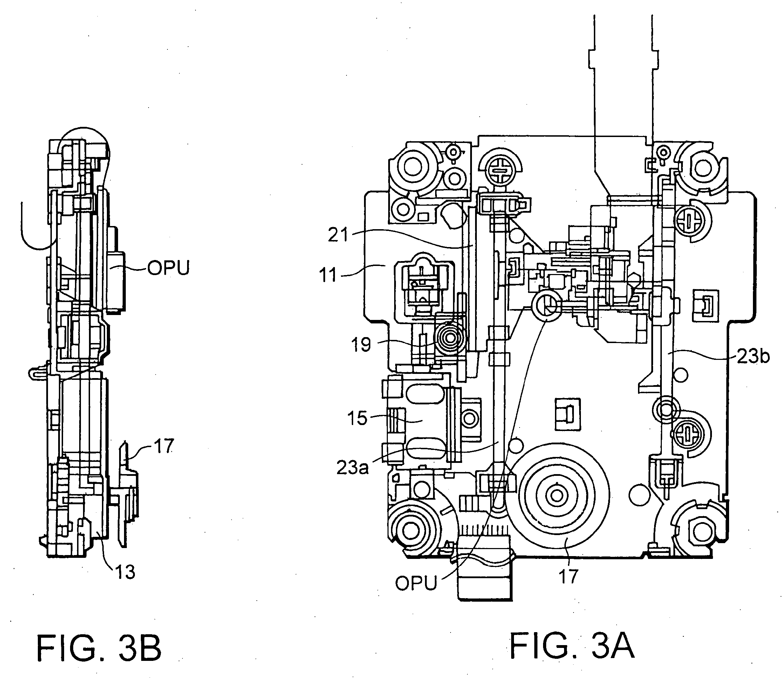

Referring to Figs. 2A, 2B, 3A, and 3B, the description will proceed to an optical disc drive to which this invention is applicable. Figs. 2A and 2B show a state where an optical pickup unit OPU is moved in an inner circumference while Figs. 3A and 3B show a state where the optical pickup unit OPU is moved in an outer circumference. Figs. 2A and 3A are plan views while Figs. 2B and 3B are left-hand side views.

On a chassis 11, a spindle motor 13 and a feed motor 15 are mounted. The spindle motor 13 rotates a turn table 17 attached thereon. On the turn table 17, an optical disc (not shown) is mounted. Therefore, when the spindle motor 13 rotates, the optical disc mounted on the turn table 17 also rotates.

The feed motor 15 has a drive shaft engaged with a driving reduction gear 19. The driving reduction gear 19 engages with a rack 21 formed at one side of the optical pickup unit OPU. The optical pickup unit OPU is guided by a pair of guide shafts 23a and 23b. Accordingly, when the feed motor 15 rotates, the optical pickup unit OPU is moved along the pair of guide shafts 23a and 23b.

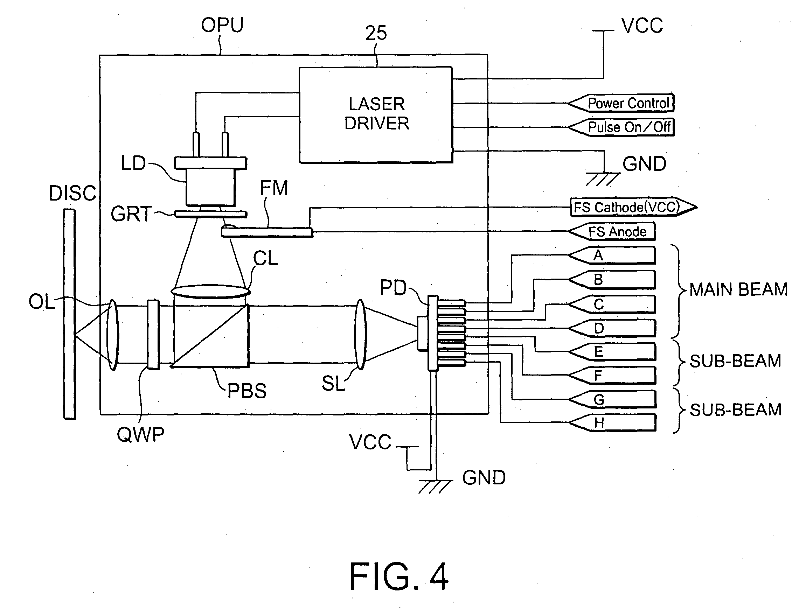

Referring to Fig. 4, the optical pickup unit OPU comprises a semiconductor laser (laser diode) LD, a diffraction grating GRT, a collimator lens CL, a polarization beam splitter PBS, a quarter wavelength plate QWP, an objective lens OL, a sensor lens SL, and a photodetector PD. The photodetector PD is called a PD-IC. In addition, the illustrated optical pickup unit OPU further comprises a front monitor FM for monitoring a part of a laser beam produced by the semiconductor laser LD and a laser driver 25 for driving the semiconductor laser LD.

Inasmuch as the illustrated optical pickup unit OPU comprises the polarization beam splitter PBS and the quarter wavelength plate QWP, the optical pickup unit OPU is called an optical pickup unit of a polarization optical system.

The semiconductor laser LD radiates a laser beam as an outgoing laser beam. The outgoing laser beam is separated into three laser beams by the diffraction grating GRT. The three laser beams comprise a main beam at a center and sub-beams at both sides. The laser beam radiated from the semiconductor laser LD is a linear polarized beam.

At any rate, radiated from the semiconductor laser LD and separated by the diffraction grating GRT, the three laser beams are collimated into a collimated beam by the collimator lens CL and thereafter is reflected at a right angle by the polarization beam splitter PBS. Reflected by the polarization beam splitter PBS, the laser beam is converted into a circular polarized beam by the quarter wavelength plate QWP and thereafter is converged (irradiated) on a signal recording surface of the optical disc DISC through the objective lens OL.

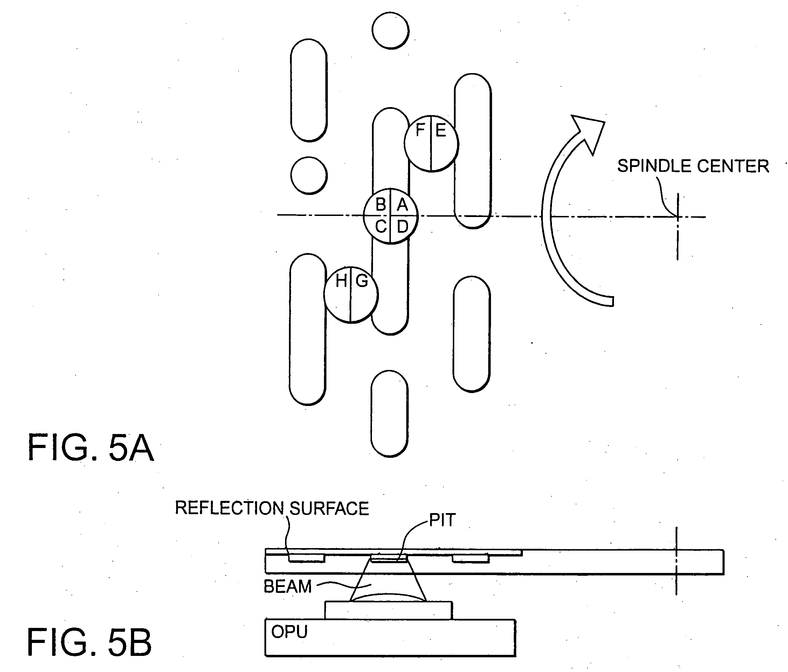

Figs. 5A and 5B show spots of the laser beam irradiated on the optical disc DISC. In the manner which is described above, the three laser beams separated by the diffraction grating GRT bring to three spots on a track of a pit surface in the optical disc DISC as shown in Fig. 5A.

Turning back to Fig. 4, reflected by the signal recording surface of the optical disc DISC, a reflected beam (return beam) passes through the objective lens OL, a polarization direction of the laser beam is bent at a right angle from that of outward by the quarter wavelength plate QWP, the laser beam passes through the polarization beam splitter PBS, and is detected by the photodetector PD through the sensor lens SL.

The illustrated optical pickup unit OPU uses, as a tracking error detection method, a method using three beams formed by using the diffraction grating. Specifically, the illustrated optical pickup unit OPU uses a differential push-pull method among methods using three beams.

More specifically, in the manner which is described above, one laser beam radiated from the semiconductor laser LD is separated into three laser beams by the diffraction grating GRT. Accordingly, the reflected beam (return beam) reflected by the optical disc DISC also comprises three laser beams. Among the three laser beams, a main beam at a center is used for generating a reading signal and a focusing error signal and two sub-beams at both sides are used for generating a tracking error signal.

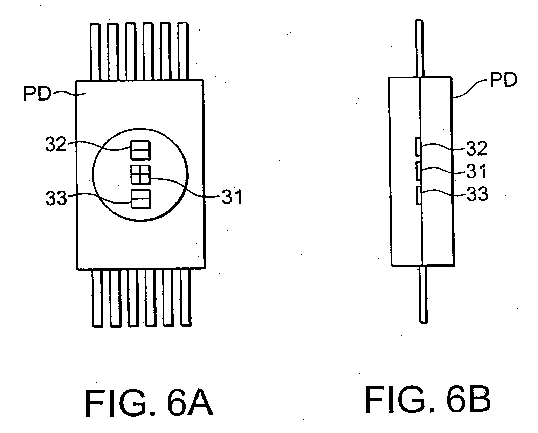

Figs. 6A and 6B show a structure of the photodetector PD for receiving the reflected beam (return beam). Fig 6A is a front view while Fig. 6B is a right-hand side view. The photodetector PD comprises a main photo receiving element 31 for receiving the main beam and a pair of sub-photo receiving elements 32 and 33 for the two sub-beams at both sides. The main photo receiving element 31 comprises four divided photo-diodes while each of the sub-photo receiving elements 32 and 33 comprises two divided photo-diodes.

Accordingly, among the three spots illustrated in Fig. 5A, the reflected beam (main beam) from a center spot (which is a part affixed with symbols of A, B, C, and D in Fig. 5A) is received, by the main photo receiving element 31 illustrated in Figs. 6A and 6B, as four main electric signals depicted at symbols of A, B, C, and D in Fig. 4. The reflected beam (sub-beam) from one side spot (which is a part affixed with symbols of E and F in Fig. 5A) is received, by one sub-photo receiving element 32 illustrated in Fig. 6A and 6B, as two sub-electric signals depicted at symbols of E and F in Fig. 4. The reflected beam (sub-beam) from another side spot (which is a part affixed with symbols of G and H in Fig. 5A) is received, by another sub-photo receiving element 33 illustrated in Fig. 6A and 6B, as two sub-electric signals depicted at symbols of G and H in Fig. 4.

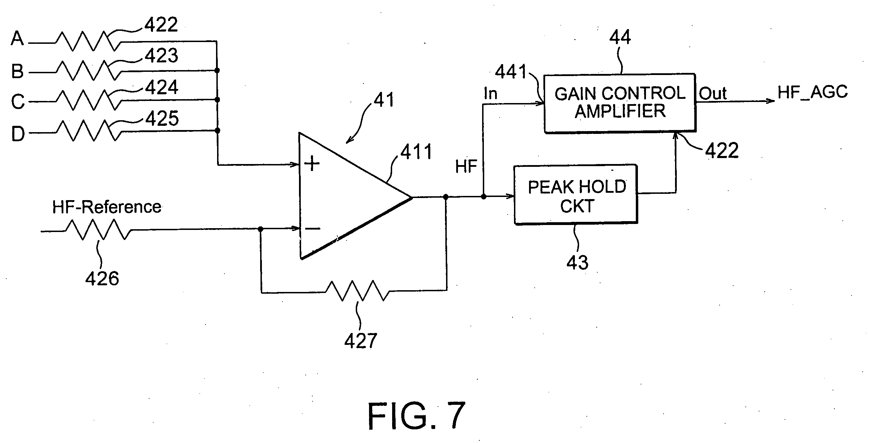

Referring now to Fig. 7, the description will proceed to an optical disc reading device according to a first embodiment of this invention.

The illustrated optical disc reading device comprises the adder circuit 41, a peak hold circuit 43, and a gain control amplifier 44.

The adder circuit 41 comprises the operational amplifier 411. The operational amplifier 411 has the non-inverting input terminal + supplied through the resistors 422 to 425 with the above-mentioned four main electric signals. The operational amplifier 411 has the inverting input terminal - supplied with the HF reference voltage through the resistor 426. The operational amplifier 411 has the output terminal connected to the inverting input terminal - through the resistor 427. The adder circuit 41 produces the HF signal (the picked up signal).

The output terminal of the adder circuit 41 is connected to the peak hold circuit 43. The peak hold circuit 43 holds a peak of the HF signal produced by the adder circuit 41 to produce a peak held signal. The peak held signal is a signal indicative of a level of a reflected beam component in the HF signal. The reflected beam component is called hereunder an "I-TOP."

The output terminal of the adder circuit 41 is connected to an input terminal of the gain control amplifier 44. The peak hold circuit 43 has an output terminal connected to a control terminal of the gain control amplifier 44. The gain control amplifier 44 amplifies the HF signal by a gain equal to a reciprocal of the peak held signal to produce an amplified HF signal.

That is, the gain control amplifier 44 serves as an amplifying arrangement for amplifying the HF signal in accordance with the level of the I-TOP. More specifically, when the level of the I-TOP is low, the gain control amplifier 44 amplifies the HF signal by a large gain (amplification factor). When the level of the I-TOP is high, the gain control amplifier 44 amplifies the HF signal by a small gain (amplification factor). Accordingly, it is possible to always fix an amplitude of the amplified HF signal.

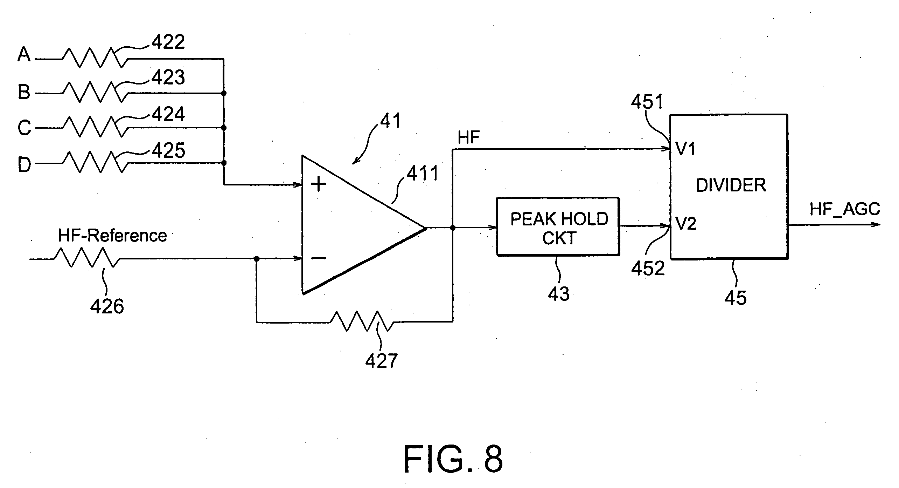

Referring now to Fig. 8, the description will proceed to an optical disc reading device according to a second embodiment of this invention.

The illustrated optical disc reading device is similar in structure and operation to the optical disc reading device illustrated in Fig. 7 except that the optical disc reading device uses a divider 45 in lieu of the gain control amplifier 44. Therefore, the same reference symbols are attached to those having similar structure in Fig. 7 and description of them is omitted to simplify the description.

The divider 45 has first and second input terminals 451 and 452. The output terminal of the adder circuit 41 is connected to the first input terminal 451 of the divider 45 while the output terminal of the peak hold circuit 43 is connected to the second input terminal 452 of the divider 45. A voltage of the HF signal supplied to the first input terminal 451 of the divider 45 is called a first voltage V1 while a voltage of the peak held signal (the level of the I-TOP) supplied to the second input terminal 452 of the divider 45 is called a second voltage V2. The divider 45 divides the first voltage V1 by the second voltage V2 to produce a divided result (V1/V2).

That is, the divider 45 serves as an amplifying arrangement for amplifying the HF signal in accordance with the level of the I-TOP. More specifically, when the level of the I-TOP is low, the divider 45 amplifies the HF signal by the large gain (amplification factor). When the level of the I-TOP is high, the divider 45 amplifies the HF signal by the small gain (amplification factor). Accordingly, it is possible to always fix an amplitude of the amplified HF signal.

The I-TOP of the HF signal always exists although the optical disc DISC of the writing type is put into an unrecorded state. The I-TOP of the HF signal includes an error signal indicative of reflectance of the optical disc DISC. Accordingly, it is possible for the optical disc reading devices illustrated in Figs. 7 and 8 to always activate a gain control of the HF signal.

It is therefore possible to fix the amplitude of the amplified HF signal at a real time. As a result, it is possible to remove a state where a feedback is not put on in the manner of the conventional optical disc reading device using the AGC circuit 48.

It will be assumed that the optical pickup unit is the optical pickup unit OPU of the polarization optical system as illustrated in Fig. 4. In this event, a phenomenon so that the amplitude of the HF signal decreases occurs caused by degradation of the reflectance due to the double refraction of the optical disc DISC. It is known in the art that this phenomenon largely changes in a surface of the optical disc DISC. Although the amplitude of the HF signal decreases due to the influence of the double refraction of the optical disc DISC, the optical disc reading device according to this invention is very extremely advantageous in that it is always possible to actively control the gain of the amplifying arrangement (the gain control amplifier 44 or the divider 45).

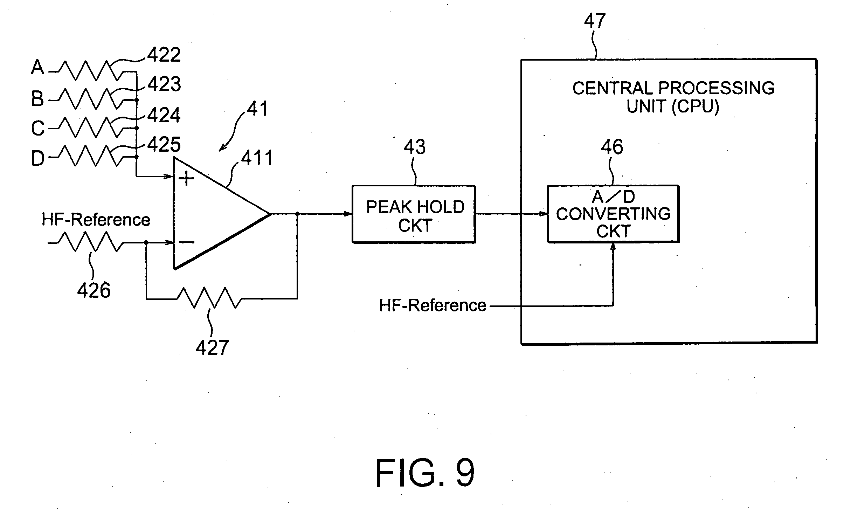

Referring now to Fig. 9, the description will proceed to an I-TOP level detection circuit for detecting the I-TOP of the HF signal.

The illustrated I-TOP level detection circuit comprises the adder circuit 41, the peak hold circuit 43, and an analog-to-digital converting circuit (A/D converting circuit) 46. The A/D converting circuit 46 is contained in a central processing unit (CPU) 47.

The adder circuit 41 comprises the operational amplifier 411. The operational amplifier 411 has the non-inverting input terminal + supplied through the resistors 422 to 425 with the above-mentioned four main electric signals. The operational amplifier 411 has the inverting input terminal - supplied with the HF reference voltage through the resistor 426. The operational amplifier 411 has the output terminal connected to the inverting input terminal - through the resistor 427. The adder circuit 41 produces the HF signal (the picked up signal).

The output terminal of the adder circuit 41 is connected to the peak hold circuit 43. The peak hold circuit 43 holds the peak of the HF signal produced by the adder circuit 41 to produce the peak held signal. The output terminal of the peak hold circuit 43 is connected to an input terminal of the A/D converting circuit 46. The A/D converting circuit 46 is also supplied with the HF reference signal. The A/D converting circuit 46 converts the peak held signal produced by the peak hold circuit 43 into a digital signal. The digital signal indicates the level of the I-TOP.

At any rate, the I-TOP level detection circuit detects the level of the I-TOP in the manner which is described above.

This invention estimates an amount of double refraction amount (really "a relative amount of double refraction) in the optical disc by using a correlation relationship between the level of the I-TOP and the amount of double refraction in the optical disk and carries out a reduction operation of the number of revolution (the rotation speed) of the optical disc. Specifically, when the level of the I-TOP is high, the amount of double refraction in the optical disk is small. When the level of the I-TOP is low, the amount of double refraction is large. In the manner which is described above, if the number of revolution (the rotation speed) of the optical disc is sufficiently low (e.g. 1000 rpm or less), the double refraction does not remarkably occur in the optical disc caused by occurrence of stress by centrifugal force due to rotation. Although the number of revolution (the rotation speed) of the optical disc is high, stress does not occur in an inner circumference of the optical disc.

Accordingly, a first aspect of this invention uses, as a reference level, the level of the I-TOP measured by the optical pickup unit of the polarization optical system on the number of revolution (the rotation speed) of the optical disc unaffected by the stress, estimates the relative double refraction amount in accordance with a reduction rate (ratio) to the level of the I-TOP from the reference level, and carries out reduction operation of the number of revolution (the rotation speed) of the optical disc.

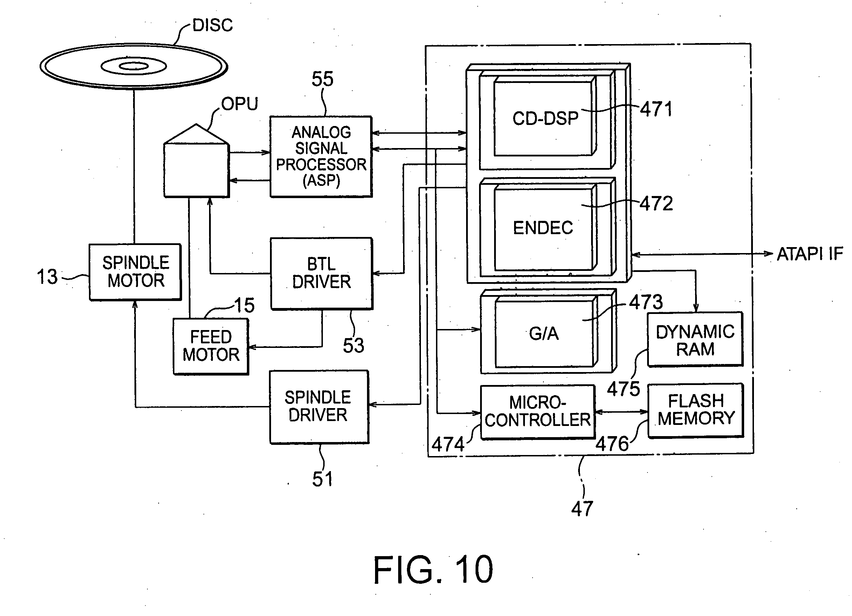

Fig. 10 shows a structure of the optical disc drive according to a first embodiment of this invention. The illustrated disc drive comprises a spindle driver 51 for driving the spindle motor 13, a BTL driver 53 carrying out a feed control of the feed motor 15 and a focusing control and a tracking control of the optical pickup unit OPU of the polarization optical system, and an analog signal processor (ASP) 55 including the above-mentioned adder circuit 41 and the peak hold circuit 43. The analog signal processor 55 controls the laser driver 25 (Fig. 4) to enable to control quantity of light of the laser beam radiated from the semiconductor laser LD.

The analog signal processor 55, the BTL driver 53, and the spindle driver 51 are controlled by the central processing unit 47. The central processing unit 47 comprises a CD-DSP 471, an EDNEC 472, a G/A 473, a micro-controller 474, and memories such as a dynamic RAM 475 and a flash memory 476.

The central processing unit 47 sends a feed command to the BTL driver 53. Responsive to the feed command, the BTL driver 53 drives the feed motor 15 so as to move the optical pickup unit OPU of the polarization optical system toward from an inner circumference to an outer circumference of the optical disc DISC.

The central processing unit 47 sends a revolution command to the spindle driver 51. Responsive to the revolution command, the spindle driver 51 rotates the spindle motor 13 at the number of revolution (rotation speed) designated by the revolution command, thereby enabling to rotate the optical disc DISC at a plurality of different numbers of revolution (rotation speeds).

Obtained by reflecting from the optical disc DISC by the optical pickup unit OPU of the polarization optical system, the signal is received in the central processing unit 47 through the analog signal processor 55. In this event, the level of the I-TOP is received in the central processing unit 47 via the peak hold circuit 43 in the analog signal processor 55.

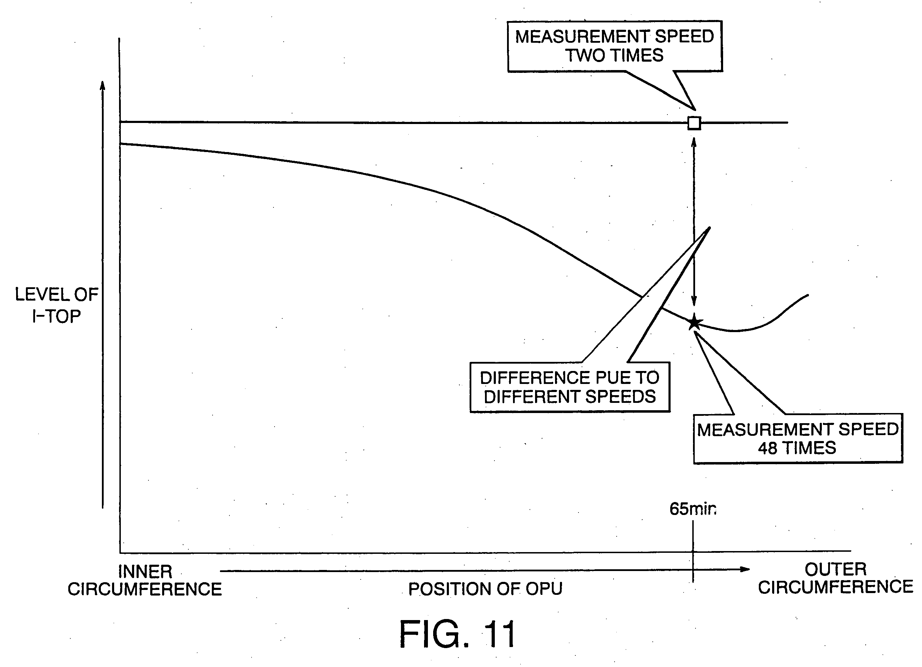

Fig. 11 shows levels of the I-TOP obtained by moving the optical pickup unit OPU of the polarization optical system from the inner circumference toward the outer circumference of the optical disc DISC when the number of revolution (rotation speed) of the optical disc DISC is two times and forty-eight times as large as a standard or fundamental speed.

As is apparent from Fig. 11, when the number of revolution (the rotation speed) of the optical disc DISC is the two times the standard speed, it is understood that the level of the I-TOP obtained by the optical pickup unit OPU of the polarization optical system is constant in spite of a position of the optical pickup unit OPU of the polarization optical system. In other words, it is gathered that the amount of the double refraction of the optical disc DISC is constant at any position thereof because when a stress does not affect in the optical disc DISC at such a low speed.

On the other hand, when the number of revolution (rotation speed) of the optical disc DISC is the forty-eight times the standard speed, it is understood that the level of the I-TOP gradually becomes low when the optical pickup unit OPU of the polarization optical system moves from the inner circumference to the outer circumference of the optical disc DISC but the level of the I-TOP increases a few at an end portion of the outer circumference of the optical disc DISC. It will be assumed that the optical disc DISC is a CD disc having a diameter of 12 centimeters. In this event, it is possible to estimate the amount of double refraction in the optical disc DISC caused by the stress due to rotation of the optical disc DISC if the above-mentioned level of the I-TOP is measured with the number of revolution (the rotation speed) of the optical disc DISC changed at a position corresponding to 65 minutes in time.

In consideration of this, the first aspect of this invention carries out a reduction operation of the number of revolution (the rotation speed) of the optical disc DISC in the manner which will later be described.

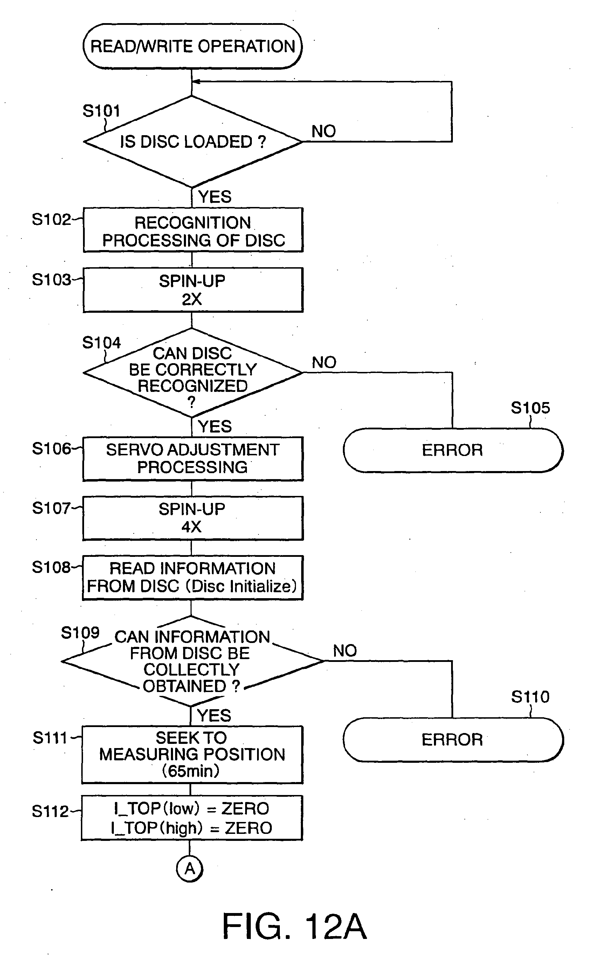

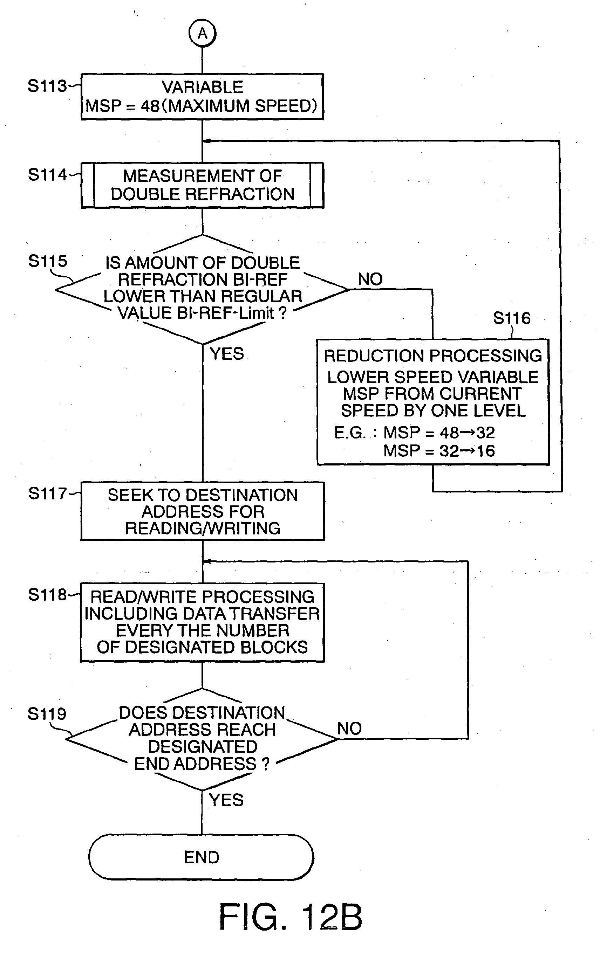

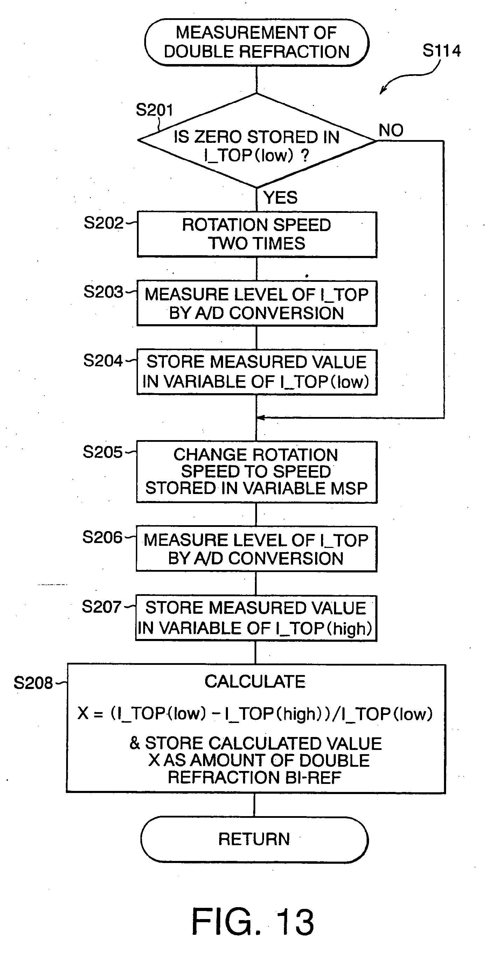

Referring to Figs. 12A, 12B, and 13, description will be made as regards the reduction operation of the number of revolution (the rotation speed) of the optical disc DISC according to the first aspect of this invention.

Referring to Fig. 12A, the central processing unit 47 confirms whether or not the optical disc DISC is loaded in the optical disc drive (step S101). When the optical disc DISC is loaded in the optical disc drive, the step S101 is followed by a step S102 at which the central processing unit 47 carries out a recognition processing of the optical disc DISC. The step S102 proceeds to a step S103 at which the central processing unit 47 makes the optical disc DISC rotate at a speed of two times the standard speed by sending, to the spindle driver 51, the revolution command for rotating the optical disc DISC at the speed of two times the standard speed. The step S103 is succeeded by a step S 104 at which the central processing unit 47 confirms whether or not the optical disc DISC can be correctly recognized. When the optical disc DISC cannot be correctly recognized, the step S104 is followed by a step S105 at which the central processing unit 47 carries out an error processing because an error occurs.

When the optical disc DISC can be correctly recognized, the step S104 proceeds to a step S106 at which the central processing unit 47 carries out a servo adjustment processing. Thereafter, the central processing unit 47 makes the optical disc DISC rotate the speed of four times the standard speed by sending, to the spindle driver 51, the revolution command for rotating the optical disc DISC at the speed of four times the standard speed. The step S107 is succeeded by a step S108 at which the central processing unit 47 reads information from the optical disc DISC through the optical pickup unit OPU and the analog signal processor 55 (initialization of the optical disc).

The step S108 is followed by a step S109 at which the central processing unit 47 confirms whether or not the information from the optical disc DISC can be correctly obtained. When the information from the optical disc DISC cannot be correctly obtained, the step S109 proceeds to a step S110 at which the central processing unit 47 carries out an error processing because an error occurs.

When the information from the optical disc DISC can be correctly obtained, the step S109 is succeeded by a step S111 at which the central processing unit 47 makes the optical pickup unit OPU seek to a predetermined measuring position (e.g. the position corresponding to 65 minutes in time when the optical disc DISC is the CD disc having a diameter of 12 centimeters) by driving the feed motor 15 by sending the feed command to the BTL driver 53. Subsequently, the central processing unit 47 sets variables of I_TOP(low) and I_ TOP(high) to zero and stores them in the dynamic RAM 475 (step S112).

Turning to Fig. 12B, the step S112 is followed by a step S113 at which the central process'ing unit 37 sets a speed variable MSP to 48 which indicates a maximum speed and stores it to the dynamic RAM. Thereafter, the central processing unit 37 carries out measurement of the double refraction (step S114).

Referring now to Fig. 13, the description will proceed to the measurement of the double refraction.

At first, the central processing unit 47 confirms whether or not the variable I_TOP(low) stores zero therein (step S201). When the variable I TOP stores zero therein, the step S201 is followed by a step S202 at which the central processing unit 47 sends, to the spindle driver 51, the revolution command indicative of the two times the standard speed to drive the spindle motor 13 thereby making the optical disc DISC rotate the speed of two times the standard speed. Detected by the photodetector PD of the optical pickup unit OPU from the optical disc DISC, the HF signal is sent to the peak hold circuit 43 in the analog signal processor 55 that detects the level of the I-TOP. The central processing unit 47 measures the level of the I-TOP by the A/D converting circuit 46 (step S203) and stores a measured result in the variable of I_TOP(low) (step S204). The I_TOP (low) indicates a reference level.

Subsequently, the central processing unit 47 changes the number of revolution (the rotation speed) of the optical disc DISC by sending, to the spindle driver 51, the revolution command indicative of the speed stored in the speed variable MSP to drive the spindle motor 13 (step S205). In a similar manner as described above, the information processing unit 47 measures, by using the A/D converter 45, the level of the I-TOP detected by the peak hold circuit 43 (step S206) and stores a measured result in the variable I_TOP(high) (step S207).

The step S207 proceeds a step S208 at which the central processing unit 47 calculates a double refraction X from the above-mentioned measured I_ TOP (low) and I_TOP(high) in accordance with a following numerical formula:

$$X = (I\_TOP(low) - I\_TOP(high))/I\_TOP(low),$$

and stores the calculated value X as an amount of double refraction BI-REF in the dynamic RAM 475.

Turning back to Fig. 12B, the central processing unit 47 determines whether or not the amount of double refraction BI-REF is lower than a regular value BI-REF-Limit (step S115). When the amount of double refraction BI-FEF is not lower than the regular value BI-REF-Limit, the step S115 proceeds to a step S116 at which the central processing unit 47 determines the influence of the double refraction of the optical disc DISC due to a stress of rotation and carries out a reduction processing for reducing the number of revolution (the rotation speed) by controlling the number of revolution (the rotation speed) of the spindle motor 13 through the spindle driver 51 so as to lower the speed variable MSP from a current speed to a lower speed by one level. For example, when the current speed indicated by the speed variable MSP is forty eight times the standard speed, the central processing unit 47 lowers the current speed to thirty two times the standard speed by one level. When the current speed indicated by the speed variable MSP is thirty two times the standard speed, the central processing unit 47 lowers the current speed to sixteen times the standard speed by one level.

The step S116 is turned back to the step S114 at which the central processing unit 47 carries out the measurement of the double refraction. Until the amount of double refraction BI-FEF is lower than the regular value BI-REF-Limit (Yes in the step S115), the central processing unit 47 repeats operations from the step S114 to the step S116.

When the amount of double refraction BI-FEF is lower than the regular value BI-REF-Limit, the step S115 is followed by a step S117 at which the central processing unit 47 drives the feed motor 15 by sending the feed command to the BLT driver 53 to seek or move the optical pickup unit OPU to a destination address for reading/writing. The step S117 proceeds to a step S118 at which the central processing unit 47 carries out a read/write processing through the optical pickup unit OPU and the analog signal processor 55. The reading/ writing processing includes data transfer every the number of designated blocks. The central processing unit 47 repeats the read/write processing until the destination address reaches a designated END address (step S119).

In the manner which is described above, it is possible for this invention to carry out the reduction operation of the number of revolution by preliminarily measuring (estimating) the double refraction before carrying out the reading/writing processing.

Although the peak level of the HF signal is used in the optical disc drive in the first aspect of this invention, an amplitude of the HF signal may be used in lieu of the peak level of the HF signal.

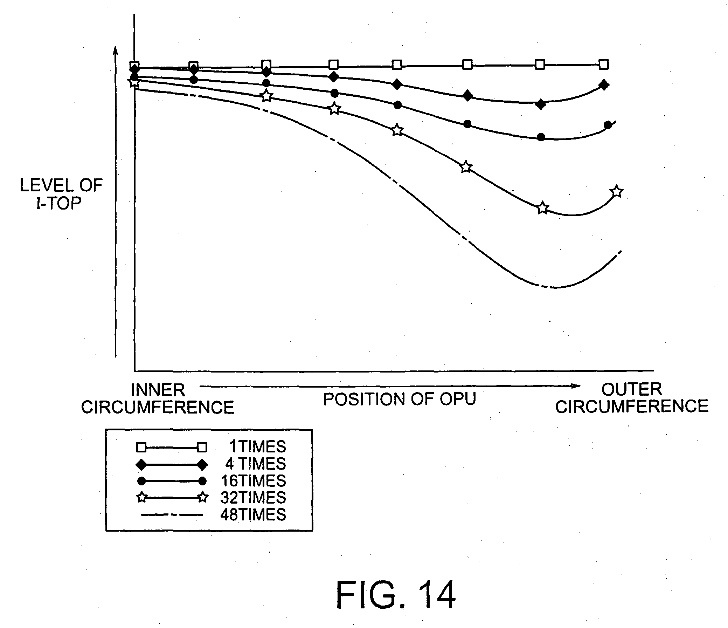

Fig. 14 shows levels of the I-TOP obtained by moving the optical pickup unit OPU of the polarization optical system from the inner circumference toward the outer circumference of the optical disc DISC when the number of revolution (rotation speed) of the optical disc DISC is one times, four times, sixteen times, thirty-two times, and forty-eight times as large as a standard or fundamental speed.

As is apparent from Fig. 14, when the number of revolution (the rotation speed) of a measured optical disc DISC is the one times the standard speed, it is understood that the level of the I-TOP obtained by the optical pickup unit OPU of the polarization optical system is constant in spite of a position of the optical pickup unit OPU of the polarization optical system. In other words, it is gathered that the amount of the double refraction of the optical disc DISC is constant at any position thereof because a stress does not affect in the optical disc DISC at such a low rotation speed.

It will be assumed that the optical pickup unit OPU of the polarization optical system lies in an inner circumference of the optical disc DISC. In this event, although the number of revolution (the rotation speed) of the optical disc DISC changes, the level of the I-TOP obtained by the optical pickup unit OPU of the polarization optical system merely becomes low a little as the rotation speed increases. From this matter, it is understood that the stress due to the rotation of the optical disc DISC hardly occurs at the inner circumference of the optical disc DISC. Specifically, it is possible to use, as a reference level, the level of the I-TOP obtained by the optical pickup unit OPU of the polarization optical system in spite of the number of revolution (the rotation speed) of the optical disc DISC when the optical pickup unit OPU of the polarization optical system lies in the inner circumference of the optical disc DISC.

In consideration of this, a second aspect of this invention carries out a reduction operation of the number of revolution (the rotation speed) of the optical disc at first and second modes in the manner which will later be described.

The first mode carries out a reduction operation of the number of revolution (the rotation speed) of the optical disc by preliminarily measuring (estimating) the double refraction before reading/writing while the second mode carries out a reduction operation of the number of revolution (the rotation speed) of the optical disc by measuring (estimating) the double refraction during reading/writing.

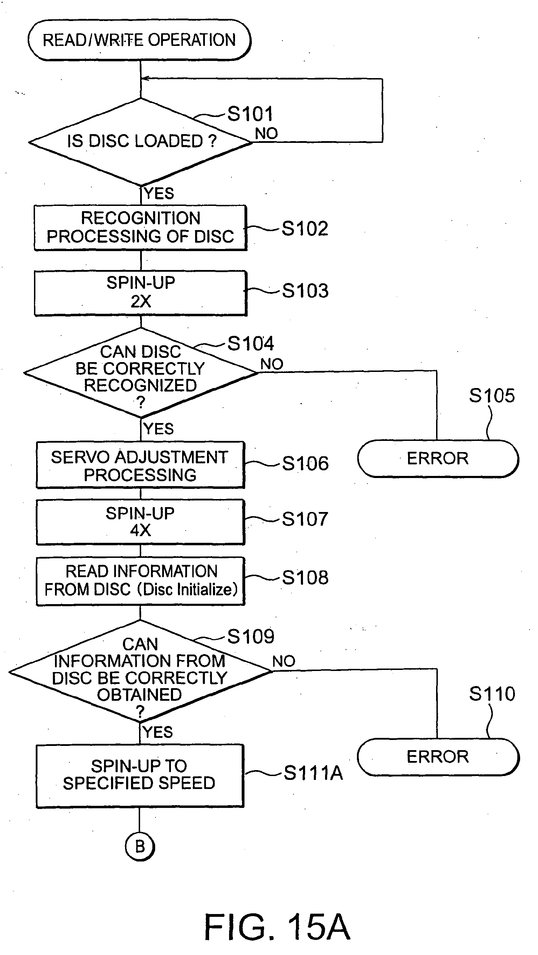

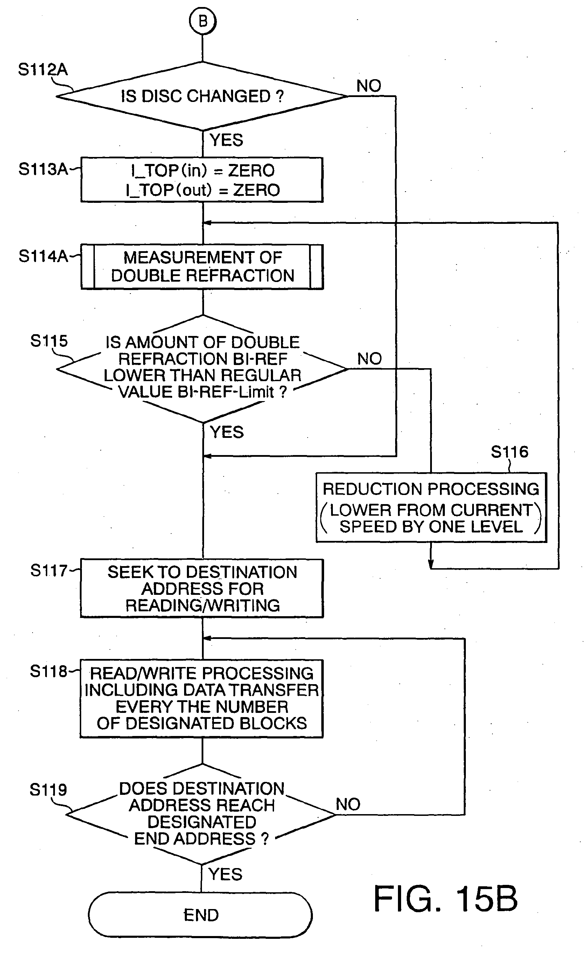

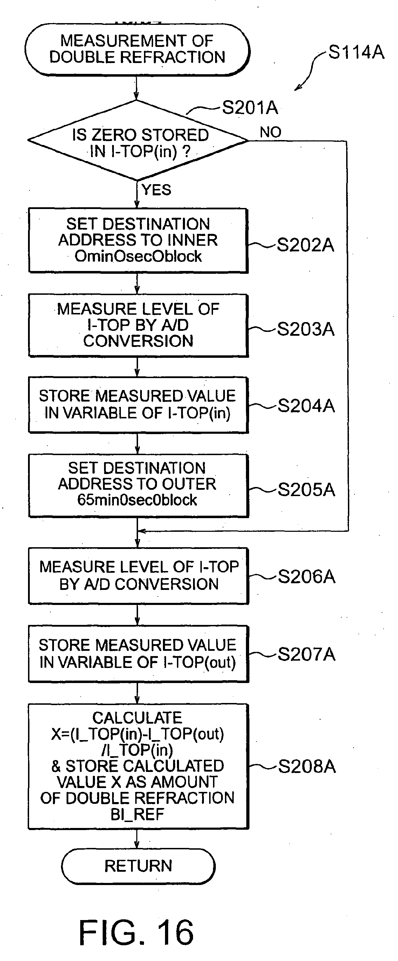

Referring to Figs. 15A, 15B, and 16, description will be made as regards the first mode in the second aspect of this invention. The first mode in the second aspect of this invention is similar to the reduction operation of the number of revolution (the rotation speed) of the optical disc DISC according to the first embodiment of this invention illustrated in Figs. 12A, 12B, and 13 except that the steps S111 through S114 are modified into steps S111A, S112A, S113A, and S114A as will later become clear.

Referring to Fig. 15A, the central processing unit 47 confirms whether or not the optical disc DISC is loaded in the optical disc drive as the step S101. When the optical disc DISC is loaded in the optical disc drive, the step S101 is followed by the step S102 at which the central processing unit 47 carries out a recognition processing of the optical disc DISC. The step S102 proceeds to the step S103 at which the central processing unit 47 makes the optical disc DISC rotate at a speed of two times the standard speed by sending, to the spindle driver 51, the revolution command for rotating the optical disc DISC at the speed of two times the standard speed. The step S103 is succeeded by the step S104 at which the central processing unit 47 confirms whether or not the optical disc DISC can be correctly recognized. When the optical disc DISC cannot be correctly recognized, the step S104 is followed by the step S105 at which the central processing unit 47 carries out an error processing because an error occurs.

When the optical disc DISC can be correctly recognized, the step S104 proceeds to the step S106 at which the central processing unit 47 carries out a servo adjustment processing. Thereafter, the central processing unit 47 makes the optical disc DISC rotate the speed of four times the standard speed by sending, to the spindle driver 51, the revolution command for rotating the optical disc DISC at the speed of four times the standard speed. The step S107 is succeeded by the step S108 at which the reads information from the optical disc DISC through the optical pickup unit OPU and the analog signal processor 55 (initialization of the optical disc).

The step S108 is followed by the step S109 at which the central processing unit 47 confirms whether or not the information from the optical disc DISC can be correctly obtained. When the information from the optical disc DISC cannot be correctly obtained, the step S109 proceeds to a step S110 at which the central processing unit 47 carries out an error processing because an error occurs.

When the information from the optical disc DISC can be correctly obtained, the step S109 is succeeded by the step S111A at which the central processing unit 47 makes the optical disc DISC rotate at a specified speed (i.e. forty eight times the standard speed) by sending a specified revolution command to the spindle motor 51.

Turning to Fig. 15B, the central processing unit 47 confirms whether or not the optical disc DISC is changed at the step S112A. That is, the central processing unit 47 confirms whether or not the optical disc DISC loaded currently is the same as the optical disc DISC loaded immediately before. In order to enable this confirmation, when the central processing unit 47 loads the optical disc DISC, the central processing unit 47 recognizes an identifier (ID) assigned with each optical disc DISC to store the ID in the dynamic RAM 475.

When the optical disc DISC is changed, the step S112A proceeds to the step S113 at which the central processing unit 47 sets variables of I_TOP(in) and I_TOP(in) to zero and stores them in the dynamic RAM 475 (step S112). Thereafter, the central processing unit 37 carries out measurement of the double refraction (step S114).

Referring now to Fig. 16, the description will proceed to the measurement of the double refraction.

At first, the central processing unit 47 confirms whether or not the variable I_TOP(in) stores zero therein (step S201A). When the variable I_TOP(in) stores zero therein, the step S201A is followed by a step S202A at which the central processing unit 47 sets a destination address to an inner circumference 0min0sec0block and sends the feed command to the BLT driver 53 to drive the feed motor 15, thereby making the optical pickup unit OPU move in an inner circumference position of the optical disc DISC. Detected by the photodetector PD of the optical pickup unit OPU from the optical disc DISC, the HF signal is sent to the peak hold circuit 43 in the analog signal processor 55 that detects the level of the I-TOP. The central processing unit 47 measures the level of the I-TOP by the A/D converting circuit 46 (step S203A) and stores a measured result in the variable of I_TOP(in) (step S204A). The I_TOP(in) indicates a reference level.

Subsequently, the central processing unit 47 sets the destination address to an outer circumference 65min0sec0block (step S205A) and sends the feed command to the BLT driver 53 to drive the feed motor 15, thereby making the optical pickup unit OPU move in an outer circumference position of the optical disc DISC. In a similar manner as described above, the information processing unit 47 measures, by using the A/D converter 45, the level of the I-TOP detected by the peak hold circuit 43 (step S206A) and stores a measured result in the variable I_TOP(out) (step S207A).

The step S207A proceeds a step S208A at which the central processing unit 47 calculates a double refraction X from the above-mentioned measured values I_TOP(in) and I_TOP(out) in accordance with a following numerical formula:

$$X = (I\_TOP(in) - I\_TOP(out))/I\_TOP(in),$$

and stores the calculated value X as an amount of double refraction BI-REF in the dynamic RAM 475.

Turning back to Fig. 15B, the central processing unit 47 determines whether or not the amount of double refraction BI-REF is lower than a regular value BI-REF-Limit at the step S115. When the amount of double refraction BI-FEF is not lower than the regular value BI-REF-Limit, the step S115 proceeds to the step S116 at which the central processing unit 47 determines the influence of the double refraction of the optical disc DISC due to a stress of rotation and carries out a reduction processing for reducing the number of revolution by controlling the number of revolution (the rotation speed) of the spindle motor 13 through the spindle driver 51 by one level (reduces the rotation speed to thirty two times the standard speed).

The step S116 is turned back to the step S114A at which the central processing unit 47 carries out the measurement of the double refraction. Until the amount of double refraction BI-FEF is lower than the regular value BI-REF-Limit (Yes in the step S115), the central processing unit 47 repeats operations from the step S114A to the step S116.

When the amount of double refraction BI-FEF is lower than the regular value BI-REF-Limit, the step S115 is followed by the step S117 at which the central processing unit 47 drives the feed motor 15 by sending the feed command to the BLT driver 53 to seek or move the optical pickup unit OPU to the destination address for reading/writing. The step S117 proceeds to the step S118 at which the central processing unit 47 carries out a reading/writing processing through the optical pickup unit OPU and the analog signal processor 55. The reading/writing processing includes data transfer every the number of designated blocks. The central processing unit 47 repeats the reading/writing processing until the destination address reaches a designated END address at the step S119.

In the manner which is described above, it is possible for the first mode in the second aspect of this invention to carry out the reduction operation of the number of revolution (the rotation speed) by preliminarily measuring (estimating) the double refraction before carrying out the reading/writing processing.

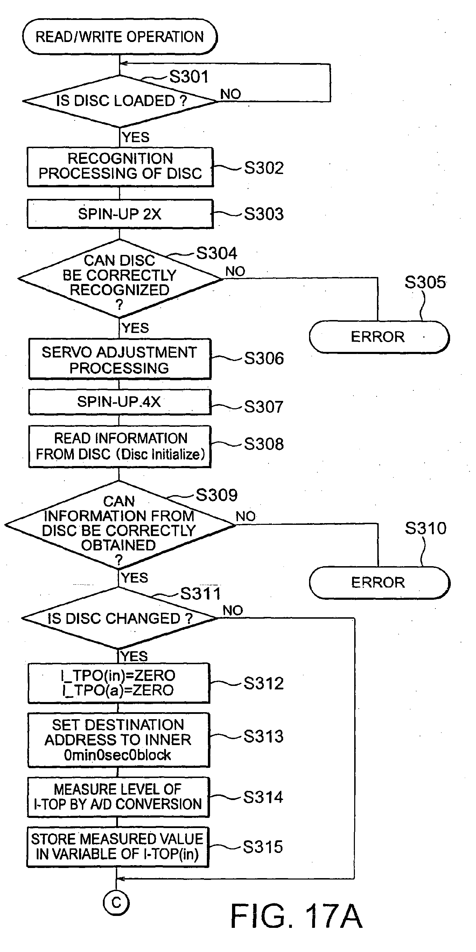

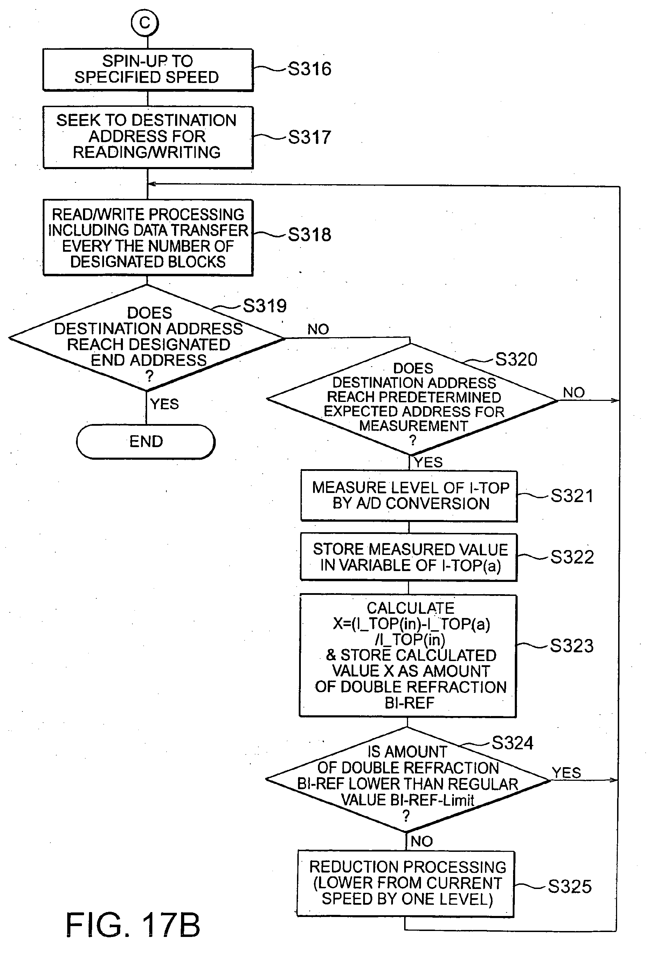

Referring to Figs. 17A and 17B, description will be made as regards the second mode in the second aspect of this invention.

Referring to Fig. 17A, the central processing unit 47 confirms whether or not the optical disc DISC is loaded in the optical disc drive (step S301). When the optical disc DISC is loaded in the optical disc drive, the step S101 is followed by a step S302 at which the central processing unit 47 carries out a recognition processing of the optical disc DISC. The step S302 proceeds to a step S303 at which the central processing unit 47 makes the optical disc DISC rotate at a speed of two times the standard speed by sending, to the spindle driver 51, the revolution command for rotating the optical disc DISC at the speed of two times the standard speed. The step S303 is succeeded by a step S304 at which the central processing unit 47 confirms whether or not the optical disc DISC can be correctly recognized. When the optical disc DISC cannot be correctly recognized, the step S304 is followed by a step S305 at which the central processing unit 47 carries out an error processing because an error occurs.

When the optical disc DISC can be correctly recognized, the step S304 proceeds to a step S306 at which the central processing unit 47 carries out a servo adjustment processing. Thereafter, the central processing unit 47 makes the optical disc DISC rotate the speed of four times the standard speed by sending, to the spindle driver 51, the revolution command for rotating the optical disc DISC at the speed of four times the standard speed. The step S307 is succeeded by a step S308 at which the central processing unit 47 reads information from the optical disc DISC through the optical pickup unit OPU and the analog signal processor 55 (initialization of the optical disc).

The step S308 is followed by the step S309 at which the central processing unit 47 confirms whether or not the information from the optical disc DISC can be correctly obtained. When the information from the optical disc DISC cannot be correctly obtained, the step S309 proceeds to a step S310 at which the central processing unit 47 carries out an error processing because an error occurs.

The steps S301 to S310 are similar to the steps S101 to S110 illustrated in Fig. 15A.

When the information from the optical disc DISC can be correctly obtained, the step S309 is succeeded by a step S311 at which the central processing unit 47 confirms whether or not the optical disc DISC is changed. When the optical disc DISC is changed, the step S311 proceeds to a step S313 at which the central processing unit 47 sets variables of I_TOP(in) and I_TOP(a) to zero and stores them in the dynamic RAM 475.

Subsequently, the central processing unit 47 sets a destination address to an inner circumference 0min0sec0block (step S313) and sends the feed command to the BLT driver 53 to drive the feed motor 15, thereby making the optical pickup unit OPU move in an inner circumference position of the optical disc DISC. Detected by the photodetector PD of the optical pickup unit OPU from the optical disc DISC, the HF signal is sent to the peak hold circuit 43 in the analog signal processor 55 that detects the level of the I-TOP. The central processing unit 47 measures the level of the I-TOP by the A/D converter 46 (step S314) and stores a measured result in the variable of I_TOP(in) (step S315). The I_TOP(in) indicates a reference level.

Turning to Fig. 17B, the central processing unit 47 sends a specified revolution command to the spindle motor 51 to make the optical disc DISC rotate a specified rotation speed (e.g. forty eight times the standard speed) (step S316). The step S316 is followed by a step S317 at which the central processing unit 47 drives the feed motor 15 by sending the feed command to the BLT driver 53 to seek or move the optical pickup unit OPU to the destination address for reading/writing. The step S317 proceeds to a step S318 at which the central processing unit 47 carries out a reading/writing processing through the optical pickup unit OPU and the analog signal processor 55. The reading/writing processing includes data transfer every the number of designated blocks. The step S318 is succeeded by a step S319 at which the central processing unit 47 determines whether or not the destination address reaches a designated END address. When the destination address reaches the designated END address, a processing comes to an end.

When the destination address does not reach the designated END address, the step S319 is followed by a step S320 at which the central processing unit 47 determines whether or not the destination address reaches a predetermined expected address for measurement of the double refraction. When the destination address does not reach the predetermined expected address for measurement of the double refraction, the step S320 turns back to the step S318. When the destination address reaches the predetermined expected address for measurement of the double refraction, the step S320 proceeds to a step S321 at which the information processing unit 47 measures, by using the A/D converter 45, the level of the I-TOP detected by the peak hold circuit 43 and stores a measured result in the variable I_TOP(a) (step S322).

The step S322 proceeds a step S323 at which the central processing unit 47 calculates a double refraction X from the above-mentioned measured values I_TOP(in) and I_TOP(a) in accordance with a following numerical formula:

$$X = (I\_TOP(in) - I\_TOP(a))/I\_TOP(in),$$

and stores the calculated value X as an amount of double refraction BI-REF in the dynamic RAM 475.

The central processing unit 47 determines whether or not the amount of double refraction BI-REF is lower than a regular value BI-REF-Limit (step S324). When the amount of double refraction BI-FEF is not lower than the regular value BI-REF-Limit, the step S324 proceeds to the step S325 at which the central processing unit 47 determines the influence of the double refraction of the optical disc DISC due to a stress of rotation and carries out a reduction processing for reducing the number of revolution by controlling the number of revolution (the rotation speed) of the spindle motor 13 through the spindle driver 51 by one level (reduces the rotation speed to thirty two times the standard speed). When the amount of double refraction BI-FEF is lower than the regular value BI-REF-Limit, the step S324 turns back to the step S318.

In the manner which is described above, it is possible for the second mode in the second aspect of this invention to carry out the reduction operation of the number of revolution (the rotation speed) at a time when the level of the I-TOP is likely to reach a dangerous level by measuring (estimating) the double refraction during the reading/writing processing.

Although the peak level of the HF signal is measured in the second aspect of this invention, an amplitude of the HF signal may be measured in place of the peak level of the HF signal.

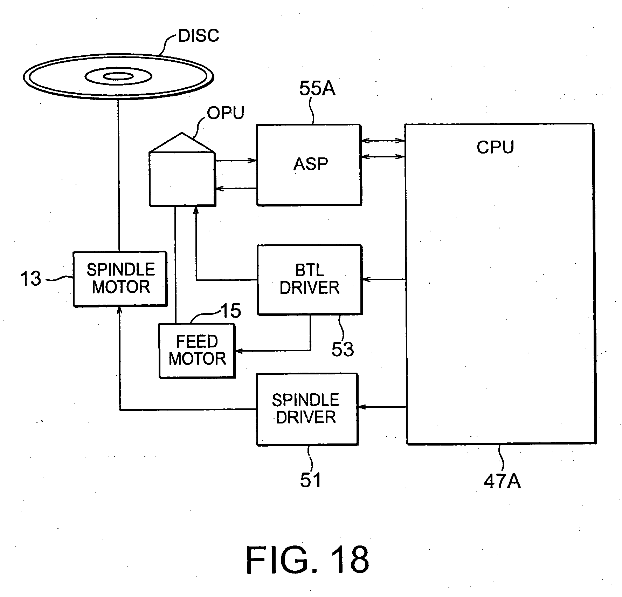

Referring to Fig. 18, the description will proceed to an optical disc drive according to a second embodiment of this invention. The optical disc drive is similar in structure and operation to the optical disc drive illustrated in Fig. 10 except that the central processing unit (CPU) and the analog signal processor (ASP) are modified from those illustrated in Fig. 10 as will later become clear. The central processing unit and the analog signal processor are therefore depicted at 47A 55A.

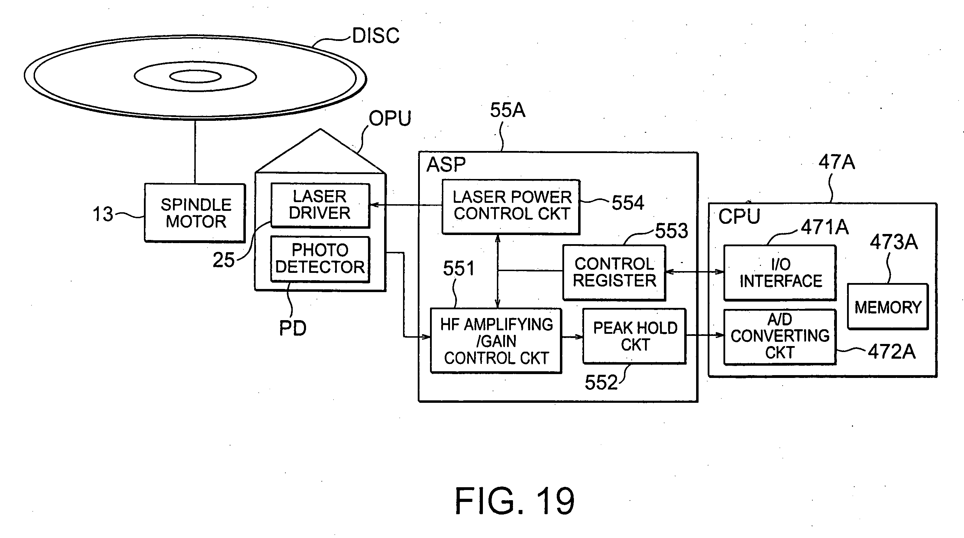

Referring to Fig. 19, the central processing unit 47A comprises an input/output (I/O) interface 471A, an analog-to-digital (A/D) converting circuit 472A, a memory 473A. The analog signal processor 55A comprises an HF amplifying/gain control circuit 551 connected to the photodetector PD of the optical pickup unit OPU of the polarization optical system, a peak hold circuit 552 connected between the HF amplifying/gain control circuit 551 and the A/D conversion circuit 472A of the central processing unit 47A, a control register 553 connected to the I/O interface 471A of the central processing unit 47A, and a laser power control circuit 554 connected to the control register 553.

The control register 553 is also connected to the HF amplifying/gain control circuit 551. The control register 553 controls a gain of the HF amplifying/gain control circuit 551 in accordance with a gain command from the central processing unit 47A. The laser power control circuit 554 is connected to the laser driver 25 of the optical pickup unit OPU of the polarization optical system. The control register 553 sends a power command to the laser power control circuit 554. Responsive to the power command, the laser power control circuit 553 controls the laser driver 25. It is therefore possible to control quantity of light of the laser beam radiated from the semiconductor laser LD.

The peak hold circuit 552 in the analog signal processor 55A detects the HF signal. A level of the I-TOP of the HF signal is received in the central processing unit 47A.

In consideration of Fig. 14, the optical disc drive according to a third aspect of this invention carries out correction for decreasing an error signal in the optical disc DISC at first and second modes which will later be described.

The first mode in the third aspect of this invention carries out the correction by preliminarily measuring (estimating) the double refraction of the optical disc before reading/writing. The second mode in the third aspect of this invention carries out the correction by measuring (estimating) the double refraction of the optical disc during reading/writing.

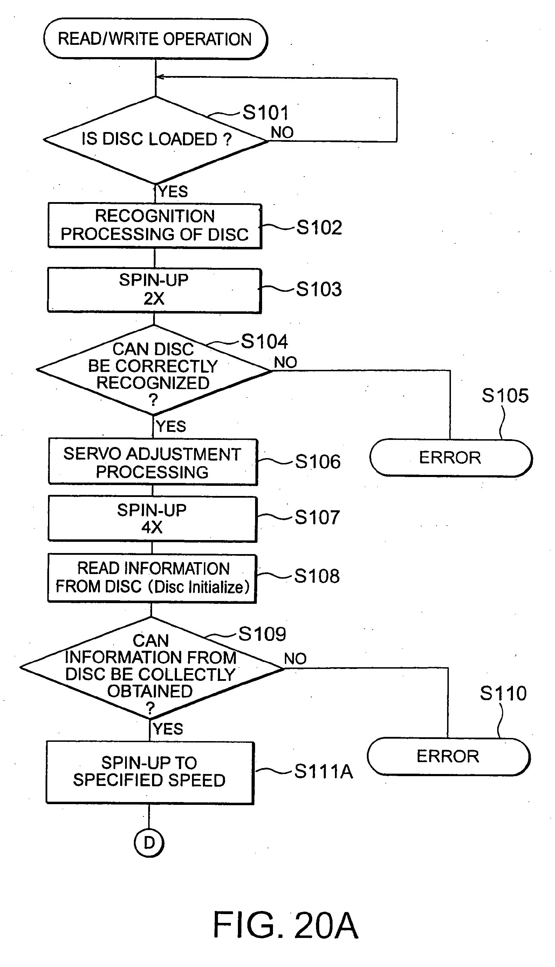

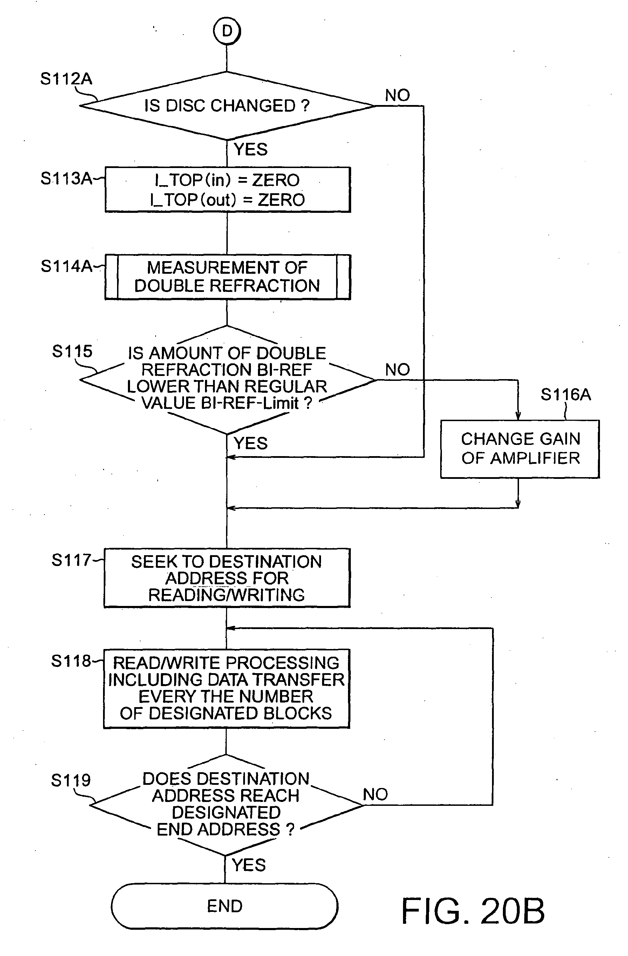

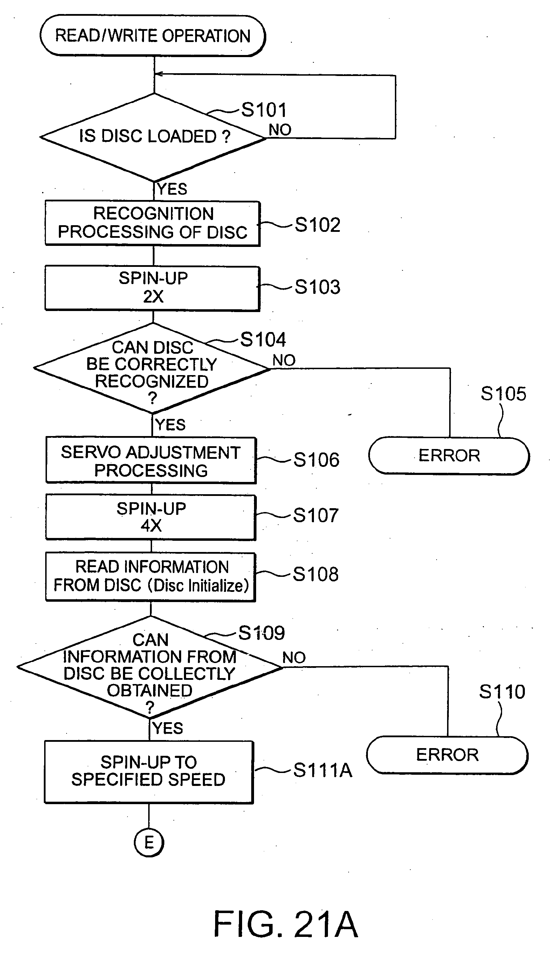

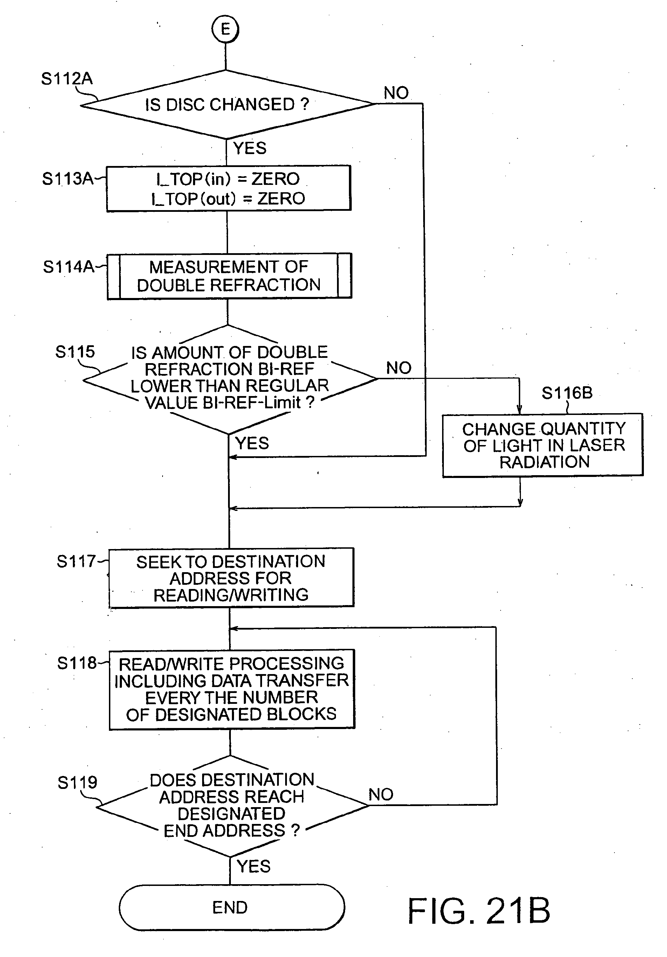

Referring to Figs. 20A, 20B, 21A, and 21B, description will be made as regards the first mode in the third aspect of this invention. Figs. 20A and 20B show an example for carrying out the correction by changing a gain of an amplifier while Figs. 21A and 21B show another example for carrying out the correction by changing quantity of light in laser radiation.

Referring now to Figs. 20A and 20B, description will be made as regards operation in a case of the first mode in the third aspect of this invention which carries out the correction by changing the gain of the amplifier. Figs. 20A and 20B are similar to Figs. 15A and 15B except that the step S116 is modified to a step S116A as will later become clear. Therefore, the same symbols are attached to similar steps and description for operation of the similar steps is omitted in order to simplify the description.

At the step S115 of Fig. 20B, when the amount of double refraction BI-REF is not less than the regular value BI-REF-Limit, the step S115 is followed by the step S116A at which the central processing unit 47A determines the influence of the double refraction in the optical disc DISC due to stress of rotation to increase the gain of an HF amplifier by controlling the HF amplifying/gain control circuit 551 through the I/O interface 471 and the control register 553. The step S116A proceeds to the step S117.

Referring now to Figs. 21A and 21B, description will be made as regards operation in another case of the first mode in the third aspect of this invention which carries out the correction by changing quantity of light in laser radiation. Figs. 21A and 21B are similar to Figs. 20A and 20B except that the step S116A is modified to a step S116B as will later become clear. Therefore, the same symbols are attached to similar steps and description for operation of the similar steps is omitted in order to simplify the description.

At the step S115 of Fig. 21B, when the amount of double refraction BI-REF is not less than the regular value BI-REF-Limit, the step S115 is followed by the step S116A at which the central processing unit 47A determines the influence of the double refraction in the optical disc DISC due to stress of rotation to increase the quantity of light in the laser radiation of the semiconductor laser LD by controlling the laser power control circuit 554 through the control register 553.

In the manner which is described above, it is possible for the first mode in the third aspect of this invention to carry out the correction by preliminarily measuring (estimating) the double refraction before reading/writing.

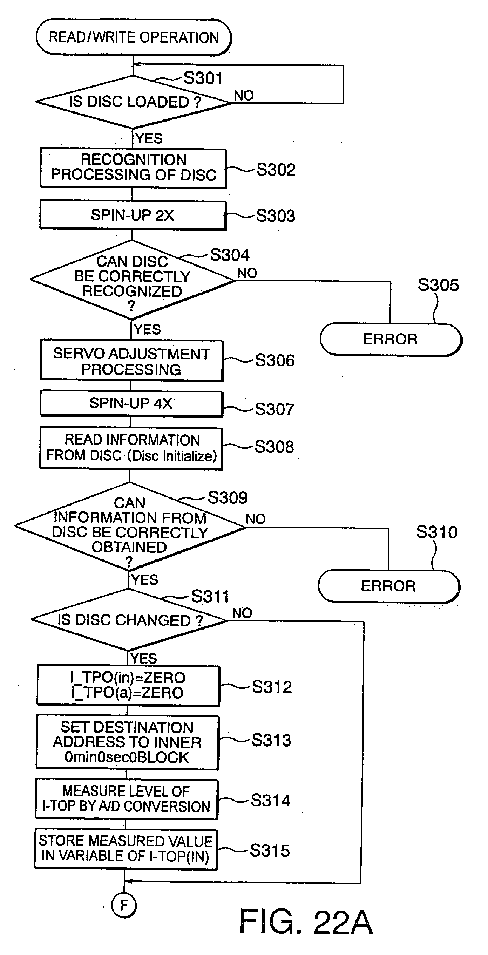

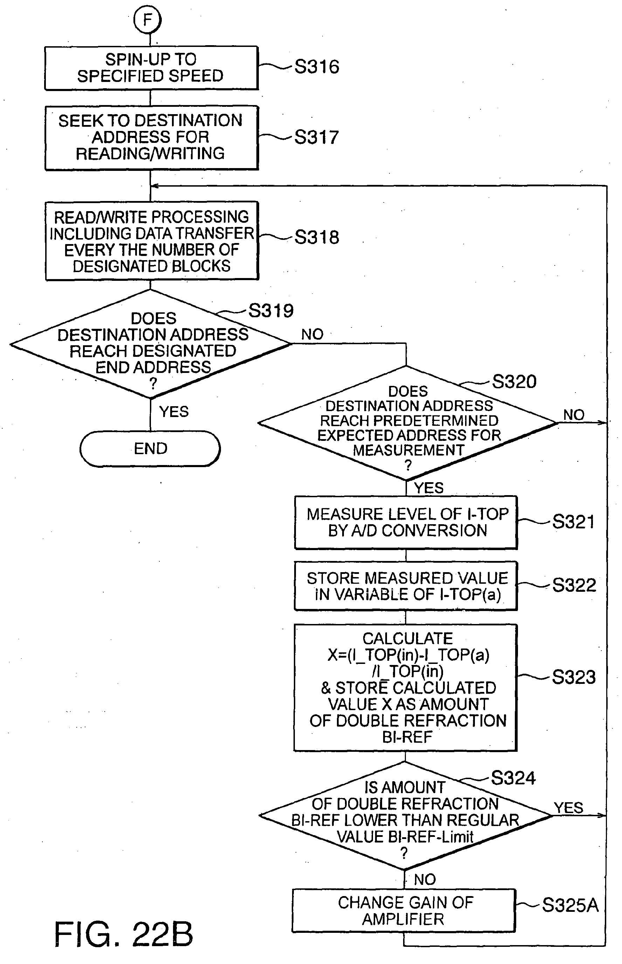

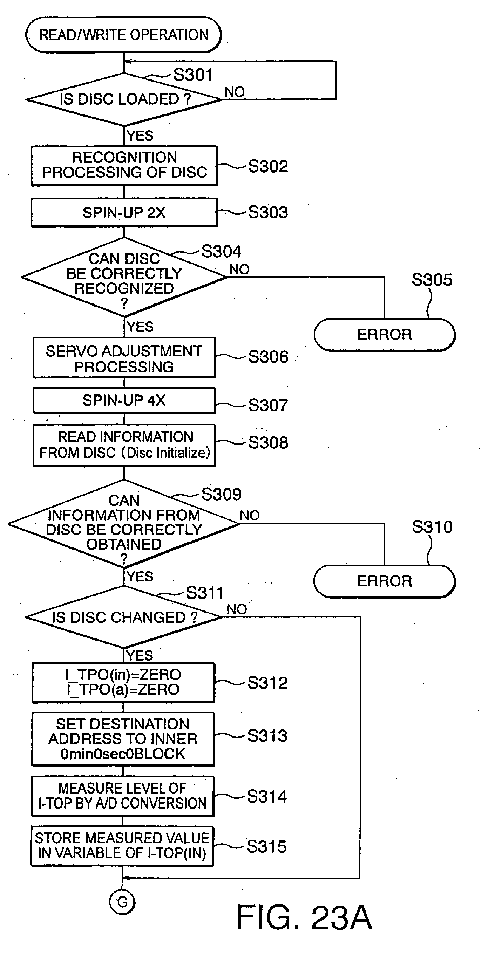

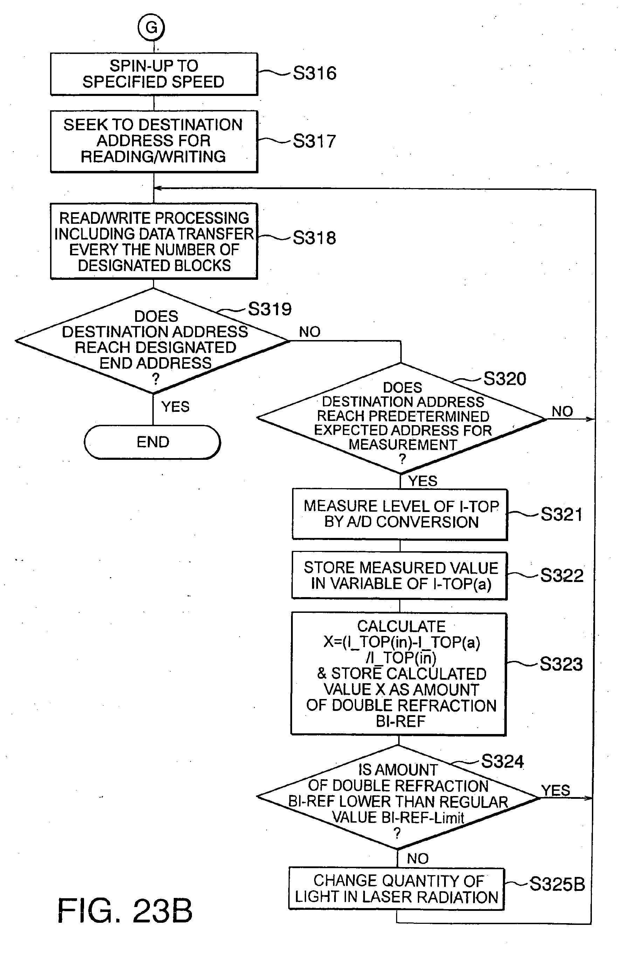

Referring to Figs. 22A, 22B, 23A, and 23B, description will be made as regards the second mode in the third aspect of this invention. Figs. 22A and 22B show an example for carrying out the correction by changing a gain of an amplifier while Figs. 23A and 23B show another example for carrying out the correction by changing quantity of light in laser radiation.

Referring now to Figs. 22A and 22B, description will be made as regards operation in a case of the second mode in the third aspect of this invention which carries out the correction by changing the gain of the amplifier. Figs. 22A and 22B are similar to Figs. 17A and 17B except that the step S325 is modified to a step S325A as will later become clear. Therefore, the same symbols are attached to similar steps and description for operation of the similar steps is omitted in order to simplify the description.

At the step S324 of Fig. 22B, when the amount of double refraction BI-REF is not less than the regular value BI-REF-Limit, the step S324 is followed by the step S325A at which the central processing unit 47A determines the influence of the double refraction in the optical disc DISC due to stress of rotation to increase the gain of an HF amplifier by controlling the HF amplifying/gain control circuit 551 through the I/O interface 471 and the control register 553. The step S325A proceeds to the step S318.

Referring now to Figs. 23A and 23B, description will be made as regards operation in another case of the second mode in the third aspect of this invention which carries out the correction by changing quantity of light in laser radiation. Figs. 23A and 23B are similar to Figs. 22A and 22B except that the step S325A is modified to a step S325B as will later become clear. Therefore, the same symbols are attached to similar steps and description for operation of the similar steps is omitted in order to simplify the description.

At the step S324 of Fig. 23B, when the amount of double refraction BI-REF is not less than the regular value BI-REF-Limit, the step S324 is followed by the step S325B at which the central processing unit 47A determines the influence of the double refraction in the optical disc DISC due to stress of rotation to increase the quantity of light in the laser radiation of the semiconductor laser LD by controlling the laser power control circuit 554 through the control register 553.

In the manner which is described above, it is possible for the second mode in the third aspect of this invention to carry out the correction at a time when the level of the I-TOP is likely to reach a dangerous level by measuring (estimating) the double refraction during the reading/writing processing.

Although the peak level of the I-TOP of the HF signal is measured in the third aspect of this invention, an amplitude of the HF signal may be used in lieu of the peak level of the I-TOP of the HF signal.

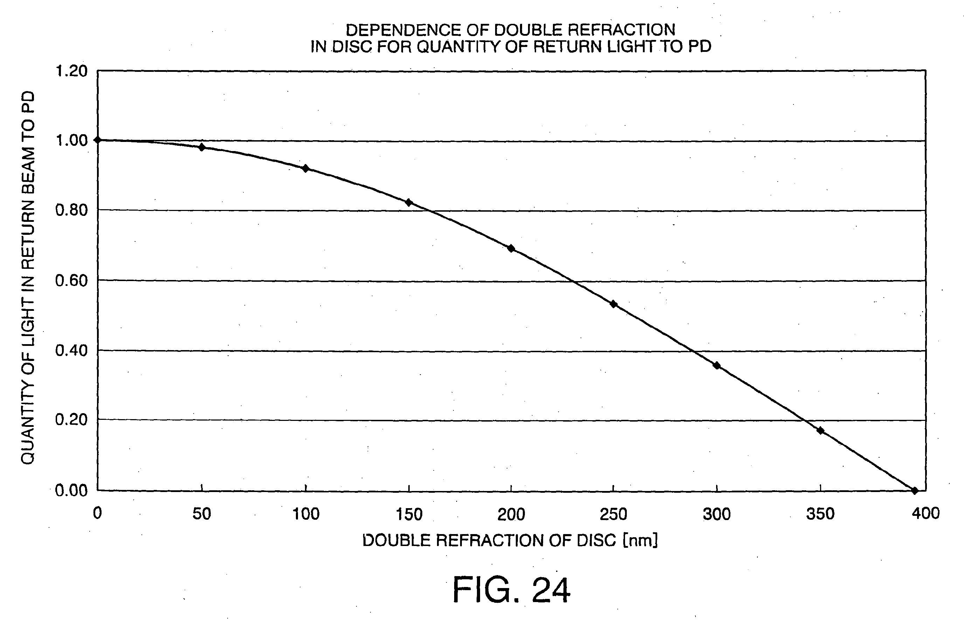

Fig. 24 illustrates a dependence relationship between quantity of light in a return beam to the photodetector PD and an mount of the double refraction in the optical disc DISC. In Fig. 24, the ordinate represents the quantity of light in the return beam to the photodetector PD with a maximum value normalized to one while the abscissa represents the double refraction [nm] of the optical disc DISC. It is assumed that an outgoing beam radiated from the quarter wavelength plate QWP toward the optical disc DISC is perfect circularly polarized light and the laser beam radiated by the semiconductor laser LD has a wavelength of 785 nanometers.

As is apparent from Fig. 24, it is understood that the amount of double refraction in the optical disc DISC becomes large when the quantity of light in the return beam to the photodetector PD becomes small. When the quantity of light in the return beam to the photodetector PD is equal to zero, the amount of the double refraction in the optical disc DISC is equal to 392.5 nanometers.

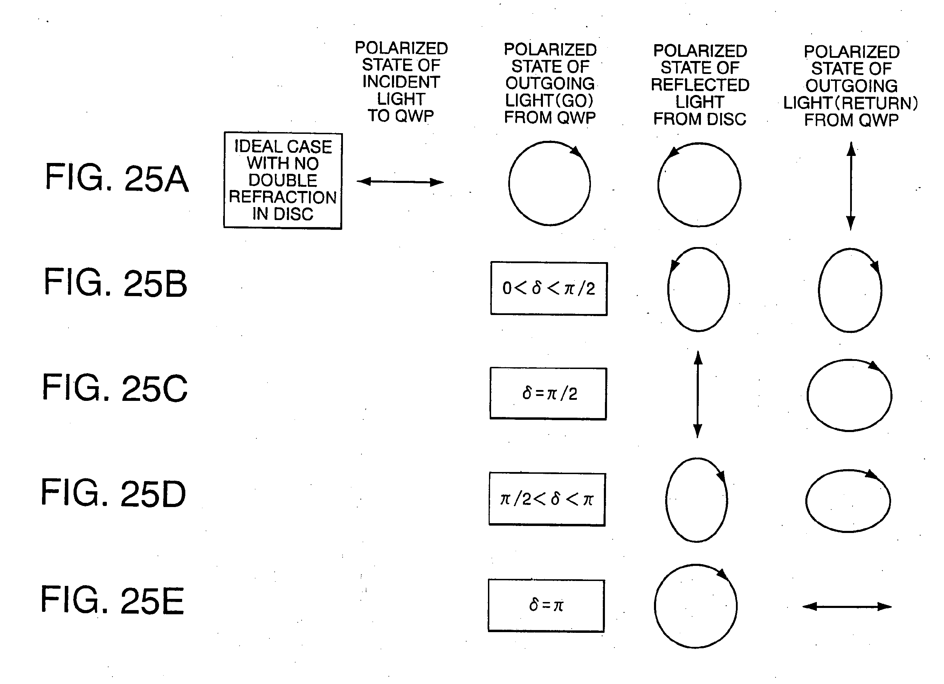

Referring now to Figs. 25A, 25B, 25C, 25D, and 25E, the description will proceed to dependence of the double refraction in the optical disc DISC for the return beam to the photodetector PD.

As shown in Fig. 25A, it will be assumed an ideal case where light perpendicularly inputs to the quarter wavelength plate QWP, a direction of a linear polarization is parallel with an X (radial) direction, and the optical disc has no double refraction. In this event, light passing through the quarter wavelength plate QWP is circularly polarized light. It will be assumed that the circularly polarized light is clockwise circularly polarized light. Light reflected by the optical disc DISC is counterclockwise circularly polarized light which is supplied to the quarter wavelength plate QWP. Outgoing light from the quarter wavelength plate QWP is a linear polarized light in parallel with a Y (tangential) direction. The linear polarized light passes through the polarization beam splitter PBS by about 100 percents and is supplied to the photodetector PD. A study will proceed with this state normalized to one.

It will now be assumed that a phase leads due to the double refraction of the optical disc DISC by $\delta$ radians. The description will be made as regards with the phase divided into four cases: i) $0 < \delta < \pi/2$, ii) $\delta = \pi/2$, iii) $\pi/2 < \delta < \pi$, and iv) $\delta = \pi$.

i) $0 < \delta < \pi/2$ (see Fig. 25B)

Light reflected by the optical disc DISC is counterclockwise elliptic polarized light which is supplied to the quarter wavelength plate QWP. Incident light becomes linear polarized light at any position within the quarter wavelength plate QWP. Outgoing light from the quarter wavelength plate QWP is produced as clockwise elliptic polarized light whose phase leads from the incident light by $\pi/2$. Inasmuch as quantity of light passing through the polarization beam splitter is indicated by a component of the Y direction in an ellipse, quantity of light in the incident light for the photodetector PD is equal to $\cos(\delta/2)$.

ii) $\delta = \pi/2$ (see Fig. 25C)

Light reflected by the optical disc DISC is linear polarized light in parallel with the Y direction that is supplied to the quarter wavelength plate QWP. Incident light is produced as clockwise circularly polarized light from the quarter wavelength plate QWP. Accordingly, quantity of light in the incident light for the photodetector PD is equal to $\cos(\pi/4)$ or about 0.707.

$$\text{iii)} \ \pi/2 < \delta < \pi \ (\text{see Fig. 25D})$$

Light reflected by the optical disc DISC is clockwise elliptic polarized light which is supplied to the quarter wavelength plate QWP. Incident light becomes circularly polarized light at any position within the quarter wavelength plate QWP. Outgoing light from the quarter wavelength plate QWP is produced as clockwise elliptic polarized light whose phase leads from the incident light by $\pi/2$. Accordingly, quantity of light in the incident light for the photodetector PD is equal to $\cos(\delta/2)$.

$$\text{iv)} \ \delta = \pi \ (\text{see Fig. 25E})$$

Light reflected by the optical disc DISC is clockwise circularly polarized light which is supplied to the quarter wavelength plate QWP. Incident light is produced as linear polarized light in parallel with the X direction from the quarter wavelength plate QWP. Accordingly, quantity of light in the incident light for the photodetector PD is equal to $\cos(\pi/2)$ or zero.

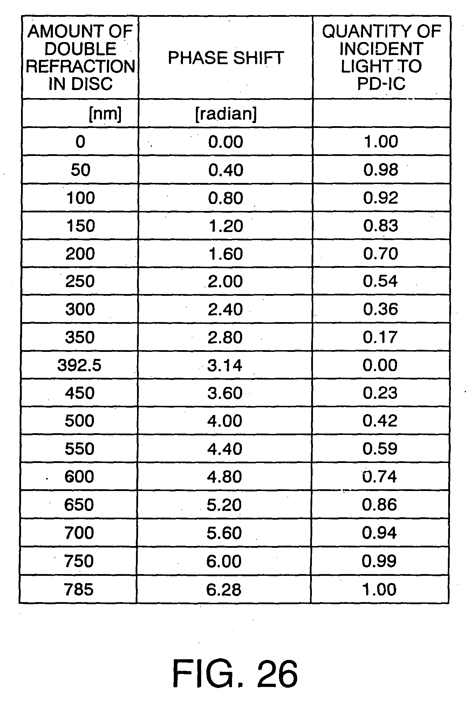

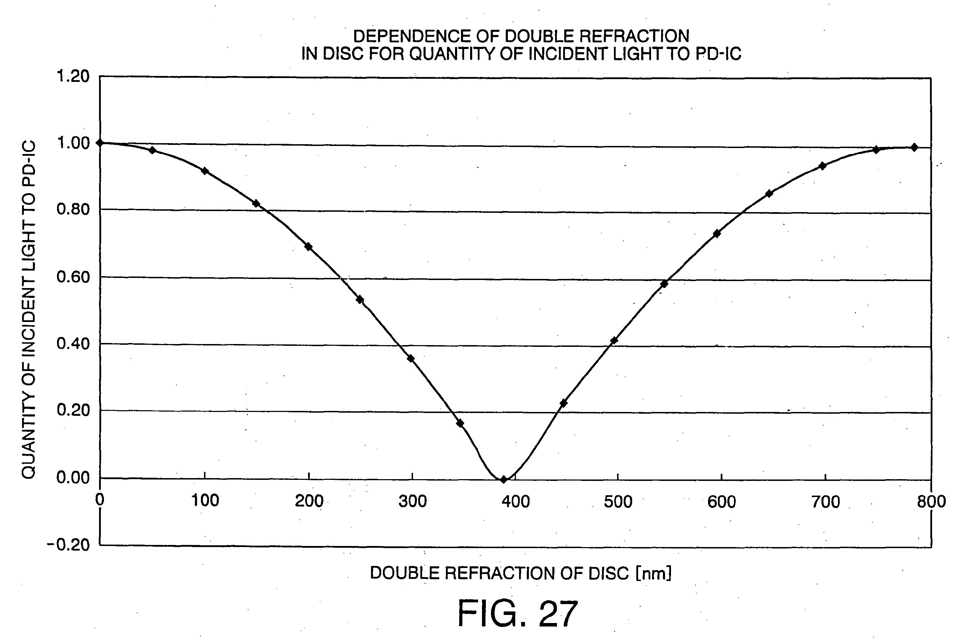

Figs. 26 and 27 are a table and a graph for summarizing the above-mentioned description. Fig. 26 is the table indicative of a relationship among the amount of double refraction in the optical disc DISC, a phase shift, and quantity of incident light supplied to the photodetector or PD-IC. Fig. 27 is a view indicative of a relationship between the quantity of incident light supplied to the photodetector PD-IC and the amount of double refraction of the optical disc DISC.

Elliptic polarized light having a major axis in the Y direction indicates a case where the phase $\delta$ leading caused by the double refraction in the optical disc DISC lies in a range between zero and $\pi$, both exclusive. This case corresponds to a portion where the amount of double refraction in the optical disc DISC lies from 0 nanometers to 392.5 nanometers.

Elliptic polarized light having a major axis in the X direction indicates a case where the phase $\delta$ leading caused by the double refraction in the optical disc DISC lies more than $\pi$ or minus. This case corresponds to a portion where the amount of double refraction in the optical disc DISC lies from 392.5 nanometers to 785 nanometers.

While this invention has thus far been described in conjunction with several preferred embodiments thereof, it will now be readily possible for those skilled in the art to put this invention into various other manners. For example, although the level of the I-TOP is measured in the above-mentioned embodiments, an error signal may be measured in lieu of this. In addition, an amplitude of the HF signal may be used in place of a peak level of the HF signal.

## Claims

1. An optical disc reading device for reading a picked-up signal from a rotating optical disc by an optical pickup unit (OPU), **characterized by** amplifying means (44, 45) for amplifying the picked-up signal to produce an amplified signal and gain control means (43) for controlling a gain of said amplifying means so that a peak level of the amplified signal is fixed.

2. An optical disc reading device as claimed in claim 1, wherein said optical pickup unit comprises an optical pickup unit of a polarization optical system.

3. An optical disc reading device as claimed in claims 1 or 2, wherein said gain control means comprises a peak hold circuit (43) for holding a peak of the picked-up signal to produce a peak held signal, said amplifying means comprising a gain control amplifier (44) for amplifying the picked-up signal by a gain equal to a reciprocal of the peak held signal to produce the amplified signal.

4. An optical disc reading device as claimed in claims 1 or 2, wherein said gain control means comprises a peak hold circuit (43) for holding a peak of the picked-up signal to produce a peak held signal, said amplifying means comprising a divider (45) for dividing the picked-up signal by the peak held signal to produce a divided result as the amplified signal.

5. An optical disc drive for picking up a signal from a rotating optical disc by an optical pickup unit (OPU), **characterized in that** said optical disc drive comprising:

   means (S112) for preliminarily moving said optical pickup unit to a predetermined position of said optical disc before carrying out reading/writing of data for said optical disc;
   measuring means (S203, S206) for measuring a peak level of an HF signal obtained by said optical pickup unit with a rotation speed of said optical disc changed;
   means (S204) for using, as a reference level, the peak level of said HF signal obtained by said optical pickup unit on rotating said optical disc at a low rotation speed without effect of stress;
   estimating means (S208) for estimating an amount of double refraction of said optical disc using said reference level and a peak level (S207) of the HF signal measured on rotating said optical disc at a desired rotation speed; and

reducing means (S115, S116) for reducing the rotation speed of said optical disc by determining the influence of the double refraction of said optical disc caused by the stress occurring by rotation of said optical disc when the estimated amount of double refraction is not less than a predetermined amount of double refraction.

6. An optical disc drive for picking up a signal from a rotating optical disc by an optical pickup unit (OPU), **characterized in that** said optical disc drive comprising:

means (S111) for preliminarily moving said optical pickup unit to a predetermined position of said optical disc before carrying out reading/ writing of data for said optical disc;

measuring means (S203, S206) for measuring an amplitude of an HF signal obtained by said optical pickup unit with a rotation speed of said optical disc changed;

means (S204) for using, as a reference amplitude, the amplitude of said HF signal obtained by said optical pickup unit on rotating said optical disc at a low rotation speed without effect of stress;

estimating means (S208) for estimating an amount of double refraction of said optical disc using said reference amplitude and an amplitude (S207) of the HF signal measured on rotating said optical disc at a desired rotation speed; and

reducing means (S115, S116) for reducing the rotation speed of said optical disc by determining the influence of the double refraction of said optical disc caused by the stress occurring by rotation of said optical disc when the estimated amount of double refraction is not less than a predetermined amount of double refraction.

7. An optical disc drive as claimed in claims 5 or 6, wherein said optical disc drive further comprises means (S115, S116, S114) for repeating an estimation operation by said estimating means and a reduction operation by said reducing means until the estimated amount of double refraction is less than the predetermined amount of double refraction.

8. An optical disc drive as claimed in claims 5 or 6, wherein said optical pickup unit comprises an optical pickup unit of a polarization optical system.

9. An optical disc drive for picking up a signal from a rotating optical disc (DISC) by an optical pickup unit (OPU), **characterized in that** said optical disc drive comprising:

means (S11A) for preliminarily rotating said optical disc at a desired rotation speed before carrying out reading/writing of data for said optical disc;

measuring means (S202A, S203A, S205A, A206A) for measuring a peak level of an HF signal obtained by said optical pickup unit with said optical pickup moved from an inner circumference to an outer circumference of said optical disc;

means (S204A) for using, as a reference level, the peak level of said HF signal obtained by said optical pickup unit when said optical pickup unit lies in an inner circumference of said optical disc;

estimating means (S208A) for estimating an amount of double refraction of said optical disc using said reference level and a peak level (S207A) of the HF signal measured when said optical pickup unit lies in a predetermined outer circumference position of said optical disc; and reducing means (S115, S116) for reducing the rotation speed of said optical disc by determining the influence of the double refraction of said optical disc caused by stress occurring by rotation of said optical disc when the estimated amount of double refraction is not less than a predetermined amount of double refraction.

10. An optical disc drive for picking up a signal from a rotating optical disc (DISC) by an optical pickup unit (OPU), **characterized in that** said optical disc drive comprising:

means (S111A) for preliminarily rotating said optical disc at a desired rotation speed before carrying out reading/writing of data for said optical disc;

measuring means (S202A, S203A, S205A, A206A) for measuring an amplitude of an HF signal obtained by said optical pickup unit with said optical pickup moved from an inner circumference to an outer circumference of said optical disc;

means (S204A) for using, as a reference amplitude, the amplitude of said HF signal obtained by said optical pickup unit when said optical pickup unit lies in an inner circumference of said optical disc;

estimating means (S208A) for estimating an amount of double refraction of said optical disc using said reference amplitude and an amplitude (S207A) of the HF signal measured when said optical pickup unit lies in a predetermined outer circumference position of said optical disc; and

reducing means (S115, S116) for reducing the rotation speed of said optical disc by determining the influence of the double refraction of said optical disc caused by stress occurring by rotation of said optical disc when the estimated amount of double refraction is not less than a predetermined amount of double refraction.

11. An optical disc drive as claimed in claims 9 or 10, wherein said optical disc drive further comprises means (S115, S116, S114A) for repeating an estimation operation by said estimating means and a reduction operation by said reducing means until the estimated amount of double refraction is less than the predetermined amount of double refraction.

12. An optical disc drive as claimed in claims 9 or 10, wherein said optical pickup unit comprises an optical pickup unit of a polarization optical system.

13. An optical disc drive for picking up a signal from a rotating optical disc (DISC) by an optical pickup unit (OPU), **characterized in that** said optical disc drive comprising:

means (S307) for making said optical disc rotate at a low rotation speed with no stress during reading/writing of data for said optical disc; means (S313, S314, S315) for measuring a peak level of an HF signal obtained by said optical pickup unit with said optical pickup unit moved in an inner circumference of said optical disc to store a measured peak level as a reference level; means (S316) for making said optical disc rotate at a desired rotation speed; means (S321, S322) for measuring a peak level of the HF signal obtained by said optical pickup unit with said optical pickup unit moved from the inner circumference toward an outer circumference of said optical disc; means (S323) for estimating an amount of double refraction of said optical disc using said reference level and a peak level of the HF signal measured every when said optical pickup unit lies in predetermined positions of said optical disc; and means (S324, S325) for reducing the rotation speed of said optical disc by determining the influence of the double refraction of said optical disc caused by stress occurring by rotation of said optical disc when the estimated amount of double refraction is not less than a predetermined amount of double refraction.

14. An optical disc drive for picking up a signal from a rotating optical disc (DISC) by an optical pickup unit (OPU), **characterized in that** said optical disc drive comprising:

means (S307) for making said optical disc rotate at a low rotation speed with no stress during reading/writing of data for said optical disc; means (S313, S314, S315) for measuring an amplitude of an HF signal obtained by said optical pickup unit with said optical pickup unit moved in an inner circumference of said optical disc to store a measured peak level as a reference amplitude; means (S316) for making said optical disc rotate at a desired rotation speed; means (S321, S322) for measuring an amplitude of the HF signal obtained by said optical pickup unit with said optical pickup unit moved from the inner circumference toward an outer circumference of said optical disc; means (S323) for estimating an amount of double refraction of said optical disc using said reference amplitude and an amplitude of the HF signal measured every when said optical pickup unit lies in predetermined positions of said optical disc; and means (S324, S325) for reducing the rotation speed of said optical disc by determining the influence of the double refraction of said optical disc caused by stress occurring by rotation of said optical disc when the estimated amount of double refraction is not less than a predetermined amount of double refraction.

15. An optical disc drive as claimed in claims 13 or 14, wherein said optical pickup unit comprises an optical pickup unit of a polarization optical system.

16. An optical disc drive for picking up a signal from a rotating optical disc (DISC) by an optical pickup unit (OPU), **characterized in that** said optical disc drive comprising:

means (S11A) for preliminarily rotating said optical disc at a desired rotation speed before carrying out reading/writing of data for said optical disc; measuring means (S202A, S203A, S205A, S206A) for measuring a peak level of an HF signal obtained by said optical pickup unit with said optical pickup moved from an inner circumference to an outer circumference of said optical disc; means (S204A) for using, as a reference level, the peak level of said HF signal obtained by said optical pickup unit when said optical pickup unit lies in an inner circumference of said optical disc;

estimating means (S208A) for estimating an amount of double refraction of said optical disc using said reference level and a peak level (S207A) of the HF signal measured when said optical pickup unit lies in a predetermined outer circumference position of said optical disc; and correcting means (S115, S116A; S116B) for carrying out correction by determining the influence of the double refraction of said optical disc caused by stress occurring by rotation of said optical disc when the estimated amount of double refraction is not less than a predetermined amount of double refraction.

17. An optical disc drive for picking up a signal from a rotating optical disc (DISC) by an optical pickup unit (OPU), **characterized in that** said optical disc drive comprising:

means (S107) for preliminarily rotating said optical disc at a desired rotation speed before carrying out reading/writing of data for said optical disc;

measuring means (S202A, S203A, S205A, S206A) for measuring an amplitude of an HF signal obtained by said optical pickup unit with said optical pickup moved from an inner circumference to an outer circumference of said optical disc;

means (S204A) for using, as a reference amplitude, the amplitude of said HF signal obtained by said optical pickup unit when said optical pickup unit lies in an inner circumference of said optical disc;

estimating means (S208A) for estimating an amount of double refraction of said optical disc using said reference amplitude and an amplitude (S207A) of the HF signal measured when said optical pickup unit lies in a predetermined outer circumference position of said optical disc; and correcting means (S115, S116A; S116B) for carrying out correction by determining the influence of the double refraction of said optical disc caused by stress occurring by rotation of said optical disc when the estimated amount of double refraction is not less than a predetermined amount of double refraction.

18. An optical disc drive as claimed in claims 16 or 17, wherein said optical pickup unit comprises an optical pickup unit of a polarization optical system.

19. An optical disc drive as claimed in claims 16 or 17, wherein said correcting means comprises means (S116A, 551, 553) for correcting a gain of an amplifier for amplifying said HF signal.

20. An optical disc drive as claimed in claims 16 or 17, wherein said correcting means comprises means (S116B, 553, 554) for correcting quantity of light radiated by a semiconductor laser in said optical pickup unit.

21. An optical disc drive for picking up a signal from a rotating optical disc (DISC) by an optical pickup unit (OPU), **characterized in that** said optical disc drive comprising:

means (S307) for making said optical disc rotate at a low rotation speed with no stress during reading/writing of data for said optical disc;

means (S313, S314, S315) for measuring a peak level of an HF signal obtained by said optical pickup unit with said optical pickup unit moved in an inner circumference of said optical disc to store a measured peak level as a reference level;

means (S316) for making said optical disc rotate at a desired rotation speed;

means (S321, S322) for measuring a peak level of the HF signal obtained by said optical pickup unit with said optical pickup unit moved from the inner circumference toward an outer circumference of said optical disc;

means (S323) for estimating an amount of double refraction of said optical disc using said reference level and a peak level of the HF signal measured every when said optical pickup unit lies in predetermined positions of said optical disc; and

correcting means (S324, S325A; S325B) for carrying out correction by determining the influence of the double refraction of said optical disc caused by stress occurring by rotation of said optical disc when the estimated amount of double refraction is not less than a predetermined amount of double refraction.

22. An optical disc drive for picking up a signal from a rotating optical disc (DISC) by an optical pickup unit (OPU), **characterized in that** said optical disc drive comprising:

means (S307) for making said optical disc rotate at a low rotation speed with no stress during reading/writing of data for said optical disc;

means (S313, S314, S315) for measuring an amplitude of an HF signal obtained by said optical pickup unit with said optical pickup unit moved in an inner circumference of said optical disc to store a measured peak level as a reference amplitude;

means (S316) for making said optical disc rotate at a desired rotation speed;

means (S321, S322) for measuring an amplitude of the HF signal obtained by said optical pickup unit with said optical pickup unit moved from the inner circumference toward an outer circumference of said optical disc;

means (S323) for estimating an amount of double refraction of said optical disc using said reference amplitude and an amplitude of the HF signal measured every when said optical pickup unit lies in predetermined positions of said optical disc; and

correcting means (S324, S325A; S325B) for carrying out correction by determining the influence of the double refraction of said optical disc caused by stress occurring by rotation of said optical disc when the estimated amount of double refraction is not less than a predetermined amount of double refraction.

23. An optical disc drive as claimed in claims 21 or 22, wherein said optical pickup unit comprises an optical pickup unit of a polarization optical system.

24. An optical disc drive as claimed in claims 21 or 22, wherein said correcting means comprises means (S325A, 551, 553) for correcting a gain of an amplifier for amplifying said HF signal.

25. An optical disc drive as claimed in claims 21 or 22, wherein said correcting means comprises means (S325B, 553, 554) for correcting quantity of light radiated by a semiconductor laser in said optical pickup unit.

A ⏦⏦⏦ 422

B ⏦⏦⏦ 423

C ⏦⏦⏦ 424

D ⏦⏦⏦ 425

HF-Reference ⏦⏦⏦

426

41

411

+

−

427

**AGC CKT**

481

GAIN CONTROL AMPLIFIER

HF_AGC

482

DETECTION CKT

483

AMPLITUDE CALCULATION CKT

48

## FIG. 1  PRIOR ART

FIG. 2B

FIG. 2A

EP 1 439 529 A2

FIG. 3A

FIG. 3B

FIG. 4

FIG. 5A

REFLECTION SURFACE
PIT
BEAM
OPU

FIG. 5B

EP 1 439 529 A2

FIG. 6A

FIG. 6B

FIG. 7

FIG. 8

EP 1 439 529 A2

A ⟋⟍⟋⟍ 422
B ⟋⟍⟋⟍ 423
C ⟋⟍⟋⟍ 424
D ⟋⟍⟋⟍ 425

41

411

HF-Reference

⟋⟍⟋⟍ 426

427

43

PEAK HOLD
CKT

47

CENTRAL PROCESSING
UNIT (CPU)

46

A∕D
CONVERTING
CKT

HF-Reference

FIG. 9

EP 1 439 529 A2

DISC

OPU

55

ANALOG SIGNAL PROCESSOR (ASP)

CD-DSP — 471

ENDEC — 472

→ ATAPI IF

13 — SPINDLE MOTOR

BTL DRIVER

15

FEED MOTOR

53

G/A — 473

DYNAMIC RAM

475

SPINDLE DRIVER

MICRO-CONTROLLER

FLASH MEMORY

51

474

476

47

FIG. 10

FIG. 11

EP 1 439 529 A2

READ/WRITE OPERATION

S101 — IS DISC LOADED ?

NO

YES

S102 — RECOGNITION PROCESSING OF DISC

S103 — SPIN-UP 2X

S104 — CAN DISC BE CORRECTLY RECOGNIZED ?

NO

S105

YES

S106 — SERVO ADJUSTMENT PROCESSING

ERROR

S107 — SPIN-UP 4X

S108 — READ INFORMATION FROM DISC (Disc Initialize)

S109 — CAN INFORMATION FROM DISC BE COLLECTLY OBTAINED ?

NO

S110

YES

S111 — SEEK TO MEASURING POSITION (65min)

ERROR

S112 — I_TOP(low) = ZERO
I_TOP(high) = ZERO

(A)

# FIG. 12A

(A)

S113 — VARIABLE
MSP = 48(MAXIMUM SPEED)

S114 — MEASUREMENT OF
DOUBLE REFRACTION

S115 — IS AMOUNT OF DOUBLE
REFRACTION BI-REF
LOWER THAN REGULAR
VALUE BI-REF-Limit ?

NO

YES

S116

REDUCTION PROCESSING
LOWER SPEED VARIABLE
MSP FROM CURRENT
SPEED BY ONE LEVEL
E.G. : MSP = 48→32
MSP = 32→16

S117 — SEEK TO DESTINATION
ADDRESS FOR
READING/WRITING

S118 — READ/WRITE PROCESSING
INCLUDING DATA TRANSFER
EVERY THE NUMBER
OF DESIGNATED BLOCKS

S119 — DOES DESTINATION
ADDRESS REACH
DESIGNATED
END ADDRESS ?

NO

YES

END

# FIG. 12B

```
        ┌─────────────────────────┐
        │   MEASUREMENT OF        │              S114
        │   DOUBLE REFRACTION     │
        └─────────────────────────┘
                    │
       S201         ▼
            ╱─────────────────────╲      NO
           ╱   IS ZERO STORED IN    ╲─────────┐
           ╲     I_TOP(low) ?       ╱          │
            ╲─────────────────────╱            │
                    │ YES                       │
                    ▼                           │
   S202 ┌─────────────────────────┐            │
        │   ROTATION SPEED         │            │
        │   TWO TIMES              │            │
        └─────────────────────────┘            │
                    │                           │
                    ▼                           │
   S203 ┌─────────────────────────┐            │
        │  MEASURE LEVEL OF I_TOP  │            │
        │   BY A/D CONVERSION      │            │
        └─────────────────────────┘            │
                    │                           │
                    ▼                           │
   S204 ┌─────────────────────────┐            │
        │  STORE MEASURED VALUE    │            │
        │  IN VARIABLE OF I_TOP(low)│           │
        └─────────────────────────┘            │
                    │◄──────────────────────────┘
                    ▼
   S205 ┌─────────────────────────┐
        │   CHANGE ROTATION        │
        │   SPEED TO SPEED         │
        │   STORED IN VARIABLE MSP │
        └─────────────────────────┘
                    │
                    ▼
   S206 ┌─────────────────────────┐
        │  MEASURE LEVEL OF I_TOP  │
        │   BY A/D CONVERSION      │
        └─────────────────────────┘
                    │
                    ▼
   S207 ┌─────────────────────────┐
        │  STORE MEASURED VALUE    │
        │  IN VARIABLE OF I_TOP(high)│
        └─────────────────────────┘
                    │
                    ▼
   S208 ┌──────────────────────────────────────┐
        │              CALCULATE               │
        │                                      │
        │ X = (I_TOP(low) − I_TOP(high))/I_TOP(low) │
        │                                      │
        │   & STORE CALCULATED VALUE           │
        │   X AS AMOUNT OF DOUBLE              │
        │   REFRACTION BI-REF                 │
        └──────────────────────────────────────┘
                    │
                    ▼
        ┌─────────────────────────┐
        │        RETURN           │
        └─────────────────────────┘
```

$$X = (I\_TOP(low) - I\_TOP(high))/I\_TOP(low)$$

# FIG. 13

FIG. 14

LEVEL OF
I-TOP

INNER
CIRCUMFERENCE    POSITION OF OPU    OUTER
CIRCUMFERENCE

1TIMES
4 TIMES
16TIMES
32TIMES
48TIMES

READ/WRITE OPERATION

IS DISC LOADED ? — S101
NO

YES

RECOGNITION
PROCESSING OF DISC — S102

SPIN-UP
2X — S103

CAN DISC
BE CORRECTLY
RECOGNIZED
? — S104
NO

S105

YES

SERVO ADJUSTMENT
PROCESSING — S106

ERROR

SPIN-UP
4X — S107

READ INFORMATION
FROM DISC (Disc Initialize) — S108

CAN
INFORMATION FROM
DISC BE CORRECTLY
OBTAINED
? — S109
NO

S110

YES

SPIN-UP TO
SPECIFIED SPEED — S111A

ERROR

B

# FIG. 15A

Ⓑ

S112A — IS DISC CHANGED ? —— NO

YES

S113A — I_TOP(in) = ZERO
I_TOP(out) = ZERO

S114A — MEASUREMENT OF
DOUBLE REFRACTION

S115 — IS AMOUNT OF DOUBLE
REFRACTION BI-REF
LOWER THAN REGULAR
VALUE BI-REF-Limit ? —— NO

YES

S116

REDUCTION PROCESSING
$\left( \begin{array}{c} \text{LOWER FROM CURRENT} \\ \text{SPEED BY ONE LEVEL} \end{array} \right)$

S117 — SEEK TO DESTINATION
ADDRESS FOR
READING/WRITING

S118 — READ/WRITE PROCESSING
INCLUDING DATA TRANSFER
EVERY THE NUMBER
OF DESIGNATED BLOCKS

S119 — DOES DESTINATION
ADDRESS REACH
DESIGNATED
END ADDRESS ? —— NO

YES

END

FIG. 15B

MEASUREMENT OF DOUBLE REFRACTION

S114A

IS ZERO STORED IN I-TOP(in) ? — S201A
NO
YES

SET DESTINATION ADDRESS TO INNER Omin0sec0block — S202A

MEASURE LEVEL OF I-TOP BY A/D CONVERSION — S203A

STORE MEASURED VALUE IN VARIABLE OF I-TOP(in) — S204A

SET DESTINATION ADDRESS TO OUTER 65min0sec0block — S205A

MEASURE LEVEL OF I-TOP BY A/D CONVERSION — S206A

STORE MEASURED VALUE IN VARIABLE OF I-TOP(out) — S207A

CALCULATE
$X = (I\_TOP(in) - I\_TOP(out) / I\_TOP(in)$
& STORE CALCULATED VALUE X AS AMOUNT OF DOUBLE REFRACTION BI_REF — S208A

RETURN

FIG. 16

READ/WRITE OPERATION

S301
IS DISC LOADED ? — NO

YES

RECOGNITION PROCESSING OF DISC — S302

SPIN-UP 2X — S303

S304
CAN DISC BE CORRECTLY RECOGNIZED ? — NO

YES

S305
ERROR

SERVO ADJUSTMENT PROCESSING — S306

SPIN-UP 4X — S307

READ INFORMATION FROM DISC (Disc Initialize) — S308

S309
CAN INFORMATION FROM DISC BE CORRECTLY OBTAINED ? — NO

YES

S310
ERROR

S311
IS DISC CHANGED ? — NO

YES

I_TPO(in)=ZERO
I_TPO(a)=ZERO — S312

SET DESTINATION ADDRESS TO INNER 0min0sec0block — S313

MEASURE LEVEL OF I-TOP BY A/D CONVERSION — S314

STORE MEASURED VALUE IN VARIABLE OF I-TOP(in) — S315

C

FIG. 17A

C

SPIN-UP TO SPECIFIED SPEED —S316

SEEK TO DESTINATION ADDRESS FOR READING/WRITING —S317

READ/WRITE PROCESSING INCLUDING DATA TRANSFER EVERY THE NUMBER OF DESIGNATED BLOCKS —S318

DOES DESTINATION ADDRESS REACH DESIGNATED END ADDRESS ? —S319

NO

YES

END

DOES DESTINATION ADDRESS REACH PREDETERMINED EXPECTED ADDRESS FOR MEASUREMENT ? —S320

NO

YES

MEASURE LEVEL OF I-TOP BY A/D CONVERSION —S321

STORE MEASURED VALUE IN VARIABLE OF I-TOP(a) —S322

CALCULATE $X = (I\_TOP(in) - I\_TOP(a)) / I\_TOP(in)$ & STORE CALCULATED VALUE X AS AMOUNT OF DOUBLE REFRACTION BI-REF —S323

IS AMOUNT OF DOUBLE REFRACTION BI-REF LOWER THAN REGULAR VALUE BI-REF-Limit ? —S324

YES

NO

REDUCTION PROCESSING (LOWER FROM CURRENT SPEED BY ONE LEVEL) —S325

## FIG. 17B

EP 1 439 529 A2

FIG. 18

FIG. 19

FIG. 20A

D

S112A — IS DISC CHANGED ?

NO

YES

S113A — I_TOP (in) = ZERO
I_TOP (out) = ZERO

S114A — MEASUREMENT OF DOUBLE REFRACTION

S115 — IS AMOUNT OF DOUBLE REFRACTION BI-REF LOWER THAN REGULAR VALUE BI-REF-Limit ?

NO

S116A

CHANGE GAIN OF AMPLIFIER

YES

S117 — SEEK TO DESTINATION ADDRESS FOR READING/WRITING

S118 — READ/WRITE PROCESSING INCLUDING DATA TRANSFER EVERY THE NUMBER OF DESIGNATED BLOCKS

S119 — DOES DESTINATION ADDRESS REACH DESIGNATED END ADDRESS ?

NO

YES

END

FIG. 20B

READ/WRITE OPERATION

S101

IS DISC LOADED ? — NO

YES

RECOGNITION PROCESSING OF DISC — S102

SPIN-UP 2X — S103

CAN DISC BE CORRECTLY RECOGNIZED ? — S104 — NO

YES

S105

ERROR

SERVO ADJUSTMENT PROCESSING — S106

SPIN-UP 4X — S107

READ INFORMATION FROM DISC (Disc Initialize) — S108

CAN INFORMATION FROM DISC BE COLLECTLY OBTAINED ? — S109 — NO

YES

S110

ERROR

SPIN-UP TO SPECIFIED SPEED — S111A

E

FIG. 21A

(E)

S112A — IS DISC CHANGED ? — NO

YES

S113A — I_TOP(in) = ZERO
I_TOP(out) = ZERO

S114A — MEASUREMENT OF DOUBLE REFRACTION

S115 — IS AMOUNT OF DOUBLE REFRACTION BI-REF LOWER THAN REGULAR VALUE BI-REF-Limit ? — NO

S116B — CHANGE QUANTITY OF LIGHT IN LASER RADIATION

YES

S117 — SEEK TO DESTINATION ADDRESS FOR READING/WRITING

S118 — READ/WRITE PROCESSING INCLUDING DATA TRANSFER EVERY THE NUMBER OF DESIGNATED BLOCKS

S119 — DOES DESTINATION ADDRESS REACH DESIGNATED END ADDRESS ? — NO

YES

END

FIG. 21B

READ/WRITE OPERATION

S301

IS DISC LOADED ? — NO

YES

RECOGNITION PROCESSING OF DISC — S302

SPIN-UP 2X — S303

CAN DISC BE CORRECTLY RECOGNIZED ? — S304 — NO — ERROR S305

YES

SERVO ADJUSTMENT PROCESSING — S306

SPIN-UP 4X — S307

READ INFORMATION FROM DISC (Disc Initialize) — S308

CAN INFORMATION FROM DISC BE CORRECTLY OBTAINED ? — S309 — NO — ERROR S310

YES

IS DISC CHANGED ? — S311 — NO

YES

I_TPO(in)=ZERO
I_TPO(a)=ZERO — S312

SET DESTINATION ADDRESS TO INNER 0min0sec0BLOCK — S313

MEASURE LEVEL OF I-TOP BY A/D CONVERSION — S314

STORE MEASURED VALUE IN VARIABLE OF I-TOP(IN) — S315

F

# FIG. 22A

(F)

SPIN-UP TO
SPECIFIED SPEED — S316

SEEK TO DESTINATION
ADDRESS FOR
READING/WRITING — S317

READ/WRITE PROCESSING
INCLUDING DATA TRANSFER
EVERY THE NUMBER OF
DESIGNATED BLOCKS — S318

DOES
DESTINATION ADDRESS
REACH DESIGNATED
END ADDRESS
? — S319

NO

YES

END

DOES
DESTINATION ADDRESS
REACH PREDETERMINED
EXPECTED ADDRESS FOR
MEASUREMENT
? — S320

NO

YES

MEASURE LEVEL OF I-TOP
BY A/D CONVERSION — S321

STORE MEASURED VALUE
IN VARIABLE OF I-TOP(a) — S322

CALCULATE
$X = (I\_TOP(in) - I\_TOP(a) / I\_TOP(in)$
& STORE CALCULATED
VALUE X AS AMOUNT
OF DOUBLE REFRACTION
BI-REF — S323

IS AMOUNT
OF DOUBLE REFRACTION
BI-REF LOWER THAN REGULAR
VALUE BI-REF-Limit
? — S324

YES

NO

CHANGE GAIN OF
AMPLIFIER — S325A

## FIG. 22B

READ/WRITE OPERATION

S301
IS DISC LOADED ? — NO

YES

RECOGNITION
PROCESSING OF DISC — S302

SPIN-UP 2X — S303

S304
CAN DISC
BE CORRECTLY — NO
RECOGNIZED
?

S305

YES

ERROR

SERVO ADJUSTMENT
PROCESSING — S306

SPIN-UP 4X — S307

READ INFORMATION
FROM DISC (Disc Initialize) — S308

S309
CAN
INFORMATION FROM — NO
DISC BE CORRECTLY
OBTAINED
?

S310

YES

ERROR

S311
IS DISC CHANGED ? — NO

YES

I_TPO(in)=ZERO
I_TPO(a)=ZERO — S312

SET DESTINATION
ADDRESS TO INNER
0min0sec0BLOCK — S313

MEASURE LEVEL OF
I-TOP BY A/D CONVERSION — S314

STORE MEASURED VALUE
IN VARIABLE OF I-TOP(IN) — S315

G

# FIG. 23A

(G)

SPIN-UP TO
SPECIFIED SPEED — S316

SEEK TO DESTINATION
ADDRESS FOR
READING/WRITING — S317

READ/WRITE PROCESSING
INCLUDING DATA TRANSFER
EVERY THE NUMBER OF — S318
DESIGNATED BLOCKS

DOES S319
DESTINATION ADDRESS
REACH DESIGNATED    NO
END ADDRESS
?

YES

END

DOES S320
DESTINATION ADDRESS
REACH PREDETERMINED    NO
EXPECTED ADDRESS FOR
MEASUREMENT
?

YES

MEASURE LEVEL OF I-TOP
BY A/D CONVERSION — S321

STORE MEASURED VALUE
IN VARIABLE OF I-TOP(a) — S322

CALCULATE
$X=(I\_TOP(in)-I\_TOP(a)$
$/I\_TOP(in))$
& STORE CALCULATED — S323
VALUE X AS AMOUNT
OF DOUBLE REFRACTION
BI-REF

IS AMOUNT S324
OF DOUBLE REFRACTION
BI-REF LOWER THAN REGULAR    YES
VALUE BI-REF-Limit
?

NO

CHANGE QUANTITY OF
LIGHT IN LASER RADIATION — S325B

# FIG. 23B

DEPENDENCE OF DOUBLE REFRACTION
IN DISC FOR QUANTITY OF RETURN LIGHT TO PD

FIG. 24

EP 1 439 529 A2

EP 1 439 529 A2

POLARIZED STATE OF INCIDENT LIGHT TO QWP

POLARIZED STATE OF OUTGOING LIGHT (GO) FROM QWP

POLARIZED STATE OF REFLECTED LIGHT FROM DISC

POLARIZED STATE OF OUTGOING LIGHT (RETURN) FROM QWP

**FIG. 25A**

IDEAL CASE WITH NO DOUBLE REFRACTION IN DISC

**FIG. 25B**

$0 < \delta < \pi/2$

**FIG. 25C**

$\delta = \pi/2$

**FIG. 25D**

$\pi/2 < \delta < \pi$

**FIG. 25E**

$\delta = \pi$

| AMOUNT OF DOUBLE REFRACTION IN DISC | PHASE SHIFT | QUANTITY OF INCIDENT LIGHT TO PD-IC |
|---|---|---|
| [nm] | [radian] | |
| 0 | 0.00 | 1.00 |
| 50 | 0.40 | 0.98 |
| 100 | 0.80 | 0.92 |
| 150 | 1.20 | 0.83 |
| 200 | 1.60 | 0.70 |
| 250 | 2.00 | 0.54 |
| 300 | 2.40 | 0.36 |
| 350 | 2.80 | 0.17 |
| 392.5 | 3.14 | 0.00 |
| 450 | 3.60 | 0.23 |
| 500 | 4.00 | 0.42 |
| 550 | 4.40 | 0.59 |
| 600 | 4.80 | 0.74 |
| 650 | 5.20 | 0.86 |
| 700 | 5.60 | 0.94 |
| 750 | 6.00 | 0.99 |
| 785 | 6.28 | 1.00 |

# FIG. 26

FIG. 27

EP 1 439 529 A2